# EUROPEAN PATENT APPLICATION

(11) **EP 2 253 807 A1**
(43) Date of publication of application: **24.11.2010**
(21) Application number: 08466028.1
(22) Date of filing: 29.10.2008
(51) Int. Cl.: F01K 21/04, F02C 6/18, F02C 7/10, F02C 3/30

(54) **Gas turbine cycle or combined steam-gas cycle for production of power from solid fuels and waste heat**

(71) Applicant: Vítkovice Power Engineering a.s., 706 00 Ostrava (CZ)
(72) Inventor: Vilimec, Ladislav, 700 30 Ostrava-Hrabuvka (CZ); Starek, Kamil, 708 00 Ostrava-Poruba (CZ)
(74) Representative: PATENTSERVIS Praha, a.s.

(57) **Abstract**

The power production process with a gas turbine, where solid fossil fuels, alternative fuels and wastes can be utilized for combustion with air or oxygen as the primary power source. The working medium is the steam-gas mixture of gas supplied by compressor (22) and the cooling medium vapors from the cooled combustion chamber (1), whereas the injected medium is injected into the gas supplied by means of compressor (22) before the compressor (22) or before the heater (7) of the steam-gas mixture or at least between some parts of the heater (7). The gas turbine (28) can be utilized in connection with a regeneration exchanger or with Rankine-Clausius steam cycle equipment utilizing waste heat of the flue gas from the gas turbine (28). The gas turbine (28) operates with the so-called wet steam cycle, which enables utilization of cooling medium heat from the combustion chamber (1), as well as isothermal compression during compression of gas creating the working medium of the gas turbine (28). Together with this gas, the cooling medium vapor from the combustion chamber (1) is used as the working medium. The temperature of the steam-gas mixture in front and behind the gas turbine (28) can be increased by reheating; the temperature of the steam-gas mixture behind the gas turbine (28) can be increased by reheating by the flue gas of the combusted primary fuel.

## Description

### Area of technology

The invention is related to a process of electric power production, or to the co-generation of heat and power, based on utilizing the primary energy of fossil fuels, as well as the primary energy of alternative fuels and waste, through their combustion, or to the utilization of waste gas heat, using a gas turbine with indirect heating and a wet steam cycle (HAT), or a combined cycle with such a gas turbine and steam cycle and dealing with the processes related to generation of a steam-gas mixture as a working medium for the gas turbine, its heating to a working temperature and by cooling it down while reaching the maximum possible amount of waste heat during condensation of the maximum amount of steam from this steam-gas mixture.

### Present state of technology

Presently, the major part of electric power is produced in steam turbine power plants, where the Rankine and Clausius steam cycle is used to convert the thermal power of the operating medium (steam) to mechanical power - the current efficiency levels achieved during the conversion of the primary energy (e.g. coal during its combustion) to electric power are approximately 45% at supercritical steam parameters.

From standpoint of the total efficiency achieved from conversion of the primary energy of fuels to electric energy, today the most successful cycles are gas-turbine combined cycles (GTCC), including turbines with a wet cycle (HAT), the efficiency of which is greater than 50% and today a value of 60% is achievable. However, quality gas and liquid fuels are used in this case.

For utilizing the primary energy of solid fossil fuels, alternative fuels and wastes for energy production or for co-generation of heat and power, mainly the Rankine-Clausius cycle, or the Organic Rankine-Clausius cycle (ORC) are used, for example, for biomass combustion. The efficiencies achieved in the power conversion at electric power production are significantly lower than during the utilization of the combined steam-gas cycle.

For utilizing the primary energy of solid fuels (especially coal) by means of the Brayton cycle, nowadays e.g. the IGCC (Integrated Gasification Combined Cycle) system has been developed, which is a cycle based on the gasification of solid fuels and wastes with subsequent combustion of the gas obtained in a gas turbine or a combined cycle based on coal combustion in a HITAF (High Temperature Air Furnace).

Gas turbines with indirect heating of the working medium are also utilized; heated, for example, by the flue gas from biomass and waste combustion; systems are also being developed, where the flue gas from the combustion of solid fuels serves directly as the operating medium.
The necessary purity of the gas or flue gas entering the gas turbine must be ensured in all systems using the Brayton cycle.
Systems with fuel combustion using oxygen are also being developed, the aim of which is to enable separation of CO₂ occurring during combustion and its possible subsequent utilization, or the more probable possibility of its storage while eliminating the negative impact on the environment.

### Principle of the invention

According to the invention, the advantage of the design is the following: Solid fossil fuels for electric power production or for the co-generation of power and heat, alternative fuels and wastes for their combustion with air or oxygen in well-proven, commonly used types of combustion equipment, e.g. with a stoker fired, pulverized fuel, gas, or oil furnace or fluidized bed can be used as the primary energy source.

The combustion equipment is of common design. The combustion chamber is connected as an evaporator to conventional boilers and the steam produced after mixing with gas generated by the compressor of a gas turbine creates a steam-gas mixture, which is used as the working medium of the gas turbine after further heating by flue gas behind the combustion chamber. The heat obtained by cooling the combustion chamber is thus utilized to achieve the necessary heat input of the gas turbine working medium.
As the primary energy source, instead of fuel, waste heat from various equipment can also be used, e.g. from the flue gas, steam or water.

An advantage here is the fact that commonly available technologies can be used for the flue gas treatment.

Another advantage is the fact that the gas turbine can be used both in connection with a regeneration exchanger and with Rankine and Clausius steam cycle equipment using the waste gas heat (flue gas heat) from the gas turbine.

An additional advantage is the fact that the gas turbine works with the so-called humid cycle, which enables utilization of the heat from the combustion chamber cooling medium and also easily carries out partial isothermal compression when compressing the gas, which is a component of the gas turbine working medium.

Another advantage is also the fact that the temperature of the steam-gas mixture before and behind the gas turbine can be increased by additional heating, e.g. with natural gas, which also increases the steam content in the steam-gas mixture, and that the temperature of the steam-gas mixture behind the gas turbine can be increased by reheating with the flue gas from primary fuel combustion.

Another advantage is the fact that the amount of steam in the steam-gas mixture at the gas turbine intake can be controlled according to the needs of the heat circuit by the intake of unusable steam produced by cooling the combustion chamber, while ensuring sufficient cooling of the combustion chamber.

Another advantage is also the fact that the heat-exchanging surfaces of equipment with a high working medium temperature are exposed to a low pressure.

Another advantage is the fact that by a suitable connection, the maximum of the condensate from the steam-gas mixture behind the gas turbine can be recovered and this then reduces the necessary amount of additional cooling medium.

Another advantage is the fact that the system can be operated only as an electric energy source or as a co-generation source of heat and power.

Yet another advantage is the fact that the steam for the steam-gas mixture can be obtained by evaporating the liquid in this mixture.

### Survey of figures in the drawings

According to the invention, the power cycle is presented in sample designs, where Fig. 1 shows the connection with a cooled combustion chamber for the combustion of fossil as well as alternative fuels and wastes with the application of the Brayton cycle and Rankine-Clausius steam cycle. Fig. 2 shows the connection for the utilization of the Brayton cycle for utilizing the perceptible heat of the flue gas or gas mixtures from various aggregates and Figs. 3 to 25 represent the alternative design of the steam-gas power cycle, whereas in Fig. 3 the connection with the cooled combustion chamber by applying the Brayton cycle and the Rankine-Clausius cycle is presented for utilizing the perceptible heat of the exiting flue gases or gas mixtures and the return of the condensate from the steam-gas mixture back into the cycle; in Fig. 4, the connection with a cooled combustion chamber or a heat aggregate is presented for applying the Brayton cycle only with the return of the condensate from the steam-gas mixture; in Fig. 5, the connection with the Brayton cycle is presented for utilizing the perceptible heat of the flue gas by preheating the injected water and the return of the condensate; in Fig. 6, the connection with preheating of the additional cooling medium is presented; in Fig. 7, the connection with the preheating of air before the compressor is presented; in Fig. 8, the alternative connection of the injected medium is presented; in Fig. 9, the connection for the isothermal compression is presented; in Fig. 10, the connection for increasing the temperature of the steam-gas mixture behind the turbine by heating the flue gas or waste gas is presented; in Fig. 11, the connection for increasing the temperature of the steam-gas mixture behind the gas turbine by additional burning of e.g. natural gas is presented; Fig. 12 represents the connection with preheating the cooling medium using flue gas; in Fig. 13, the connection with preheating the injected medium by connecting to equipment 30 of the Rankine-Clausius steam cycle is presented; in Fig. 14, the connection with the steam superheater in the flue gas behind the cooled combustion chamber is presented; in Fig. 15, the connection with the superposed high-pressure steam turbine is presented; in Fig. 16, the connection with the steam superheater without the additional turbine is presented; in Fig. 17, the connection with the steam superheater with the additional condensing turbine is presented; in Fig. 18; the connection with the steam superheater with the back-pressure turbine is presented; in Fig. 19, the connection with the steam superheater with the condensing turbine with controlled intake is presented; in Fig. 20; the connection with the steam superheater with the back-pressure turbine with controlled intake is presented; in Fig. 21, the connection with split steam superheater is presented; in Fig. 22, the connection with the steam superheater in the cooled combustion chamber is presented; in Fig. 23, the connection with the inlet part of the superheater for the steam-gas mixture in a cooled combustion chamber is presented; in Fig. 24, the connection with the outlet part of the heater of the steam-gas mixture in the cooled combustion chamber is presented; finally, in Fig. 25 the connection with the inner part of the heater of the steam-gas mixture in the cooled combustion chamber is presented.

### Examples of invention implementation

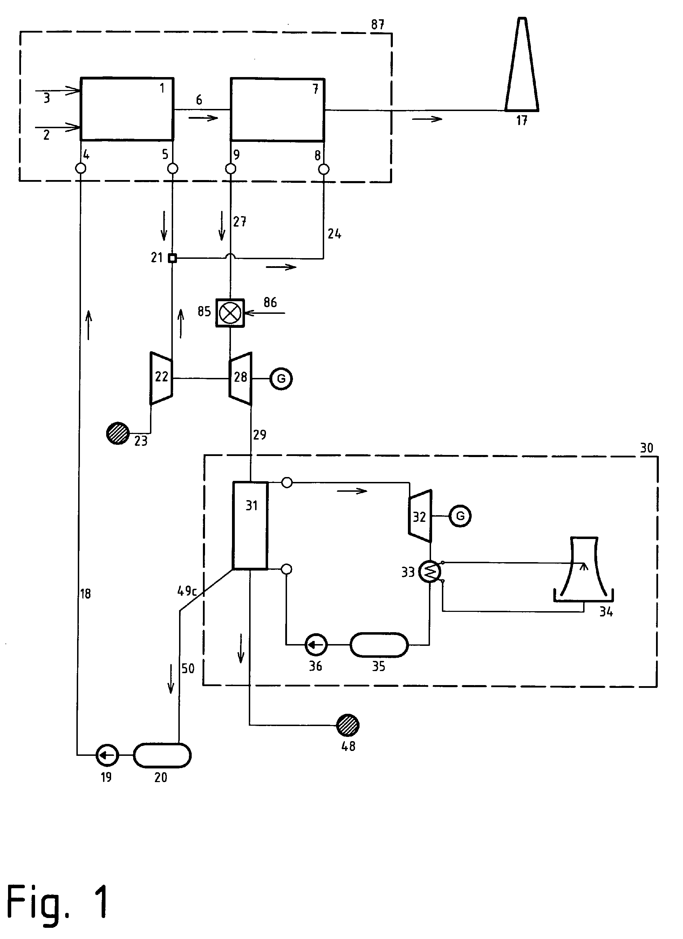

The power cycle according to the sample design in Fig. 1 consists of cooled combustion chamber 1 with fuel supply 2 and combustion air supply 3, with cooling medium 4 supply and output 5 of the cooling medium steam, which is connected by means of hot flue gas duct 6 to heater 7 for the steam-gas mixture with steam-gas mixture supply 8 and outlet 9 of the steam-gas mixture, which is connected to stack 17. In this case, the cooled combustion chamber 1 and heater 7 for the steam-gas mixture is the equipment of the steam-gas generator 87. In this sample design, the cooled combustion chamber 1 can be equipped with a stoker fired, pulverized fuel or fluidized-bed furnace for the combustion of various types of coal, alternative fuels and waste or with any other suitable furnace. The cooling medium supply 4 is connected to pipe 18 of the cooling medium with feed pump 19, which is connected to the tank of the cooling medium 20. Output 5 of the cooling medium steam is connected to the mixing unit 21, which is connected to the output from compressor 22 with air suction pipe 23. The mixing unit 21 is further connected to the steam-gas mixture supply 8 by means of connecting pipe 24. As outlet 9 of the steam-gas mixture serves inlet pipe 27, in which gas burner 85 can be placed, connected to gas turbine 28 with the generator, the output of which is connected by means of output pipe 29 of the steam-gas mixture to equipment 30 of the Rankine-Clausius cycle, which consists of the steam generator 31 for waste heat with the condensate drain pipe 49c, which is connected to the condensate collecting pipe 50, further from the steam turbine 32 with the generator, condenser 33, cooling tower 34, condensate tank 35 and the condensate feed pump 36. The outlet of the steam-gas mixture from equipment 30 of the Rankine-Clausius cycle is connected to the exhaust pipe 48 of the working medium.

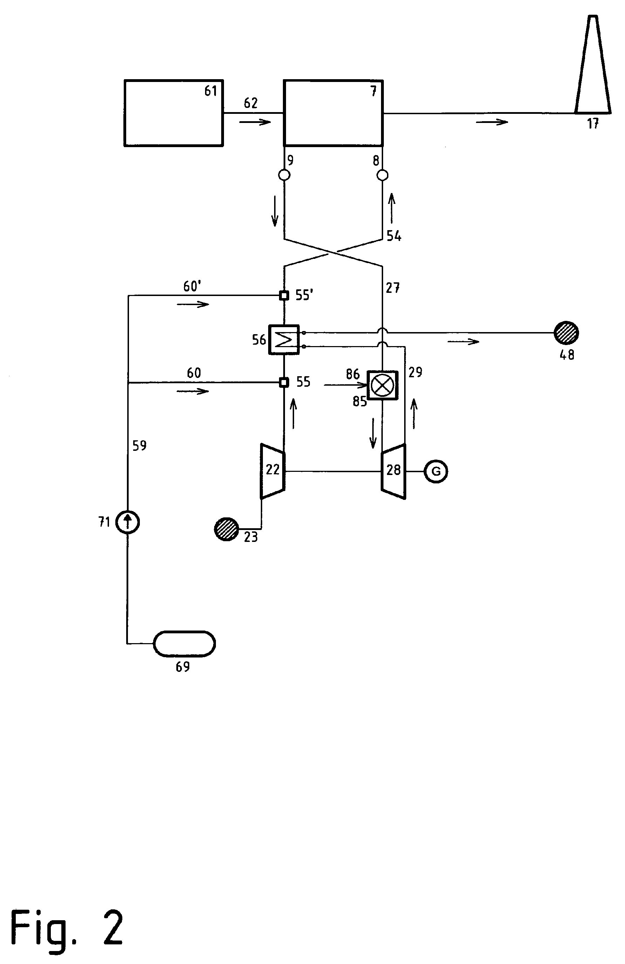

According to the alternative design in Fig. 2, the power cycle consists of aggregate 61 producing waste gas or a mixture of gases at the necessary temperature, e.g. from the heating furnace, a high-temperature fuel cell, which is connected to heater 7 for the steam-gas mixture and further to stack 17 by means of gas duct 62. The steam-gas mixture inlet 8 is carried out by means of steam-gas pipe 54 with included mixing cooler 55, regenerative heat-exchanger 56, which is an exchanger re-utilizing waste heat, and mixing cooler 55; inlet (8) is connected to the output of compressor 22 with air suction pipe 23. The outlet 9 of the steam-gas mixture is by means of supply pipe 27, where gas burner 85 can be placed, connected to the input of gas turbine 28, the output of which is by means of the steam-gas mixture output pipe 29 connected to the regenerative heat exchanger 56, the output of which is connected to operating medium exhaust pipe 48. The mixing coolers 55 and 55 are connected to pressure pipe 59 by means of injection pipes 60 and 60 with injection pump 71, which is connected to the reservoir 69 of the injected medium.

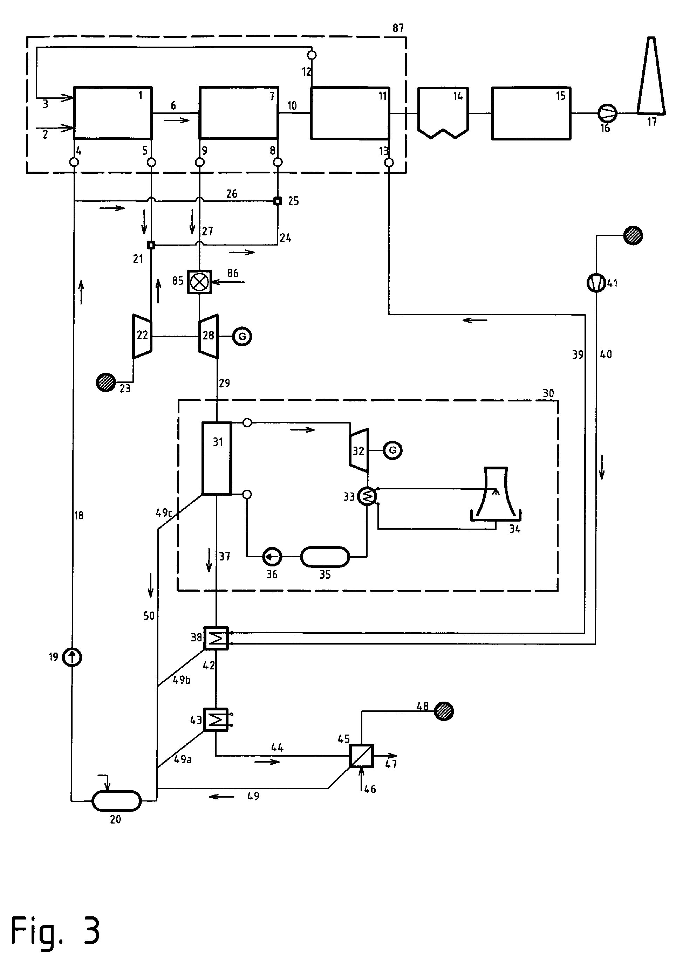

In the alternative design in Fig. 3, the power cycle consists of cooled combustion chamber 1 with fuel supply 2 and combustion air supply 3, further with cooling medium supply 4 and output 5 of the steam of the cooling medium, which is connected by means of hot flue gas duct 6 to heater 7 of the steam-gas mixture with supply 8 of the steam-gas mixture and outlet 9 of the steam-gas mixture, which is connected by means of flue gas duct 10 to combustion air heater 11 with the hot air outlet 12 and the inlet of preheated air 13. The cooled combustion chamber 1, heater 7 of the steam-gas mixture and the heater of the combustion air 11 in this case are the equipment of the steam-gas generator 87. Behind heater 11 of the combustion air, separator 14 of solid pollutants, device 15 for flue gas cleaning, the flue-gas fan 16 and stack 17 are further connected. Cooling medium supply (4) is connected to pipe 18 of the cooling medium with feed pump 19, which is connected to the cooling medium tank 20. Output 5 of the cooling medium steam is connected to mixing unit 21, which is connected to the output of compressor 22 with suction pipe 23. The mixing unit 21 is connected by means of connecting pipe 24, in which there is injection cooler 25, which is connected by means of the injected medium pipe 26 to the cooling medium pipe 18, further connected to the steam-gas mixture supply 8. Outlet 9 of the steam-gas mixture is connected by means of supply pipe 27, in which gas burner 85 can be placed, to gas turbine 28 with a generator, the output of which is output pipe 29 of the steam-gas mixture connected to installation 30 of the Rankine and Clausius steam cycle. The output of the steam-gas mixture from equipment 30 of the Rankine-Clausius steam cycle is connected to the combustion air preheater 38 by means of supply pipe 37, which is connected on the side of the cooling medium by means of the heated air output duct 39 to combustion air heater 11 and by means of the cool air input duct 40 connected to the combustion air fan 41. The output of the steam-gas mixture from the combustion air preheater 38 is connected to the hot service water heater 43 by means of drain pipe 42. The hot service water heater 43 is connected on the output side of the steam-gas mixture by means of outlet pipe 44 to the separation condenser 45 with inlet 46 and outlet 47 of the cooling medium. This is connected on the side of the output of the operating medium to the working medium exhaust pipe 48 and on the condensate output side, it is connected to condensate pipe 49, which feeds into condensate collecting pipe 50, into which pipes 49a, 49b, and 49c of the condensate from the warm service water heater 43, combustion air preheater 38 and steam generator 31 feed and which is connected to the cooling medium tank 20. In the alternative connection, the sequence of the connection of the combustion air preheater 38 and the hot service water heater 43 can be interchanged or the separation condenser 43 can be deleted, or a combination of the possibilities mentioned above can be used.

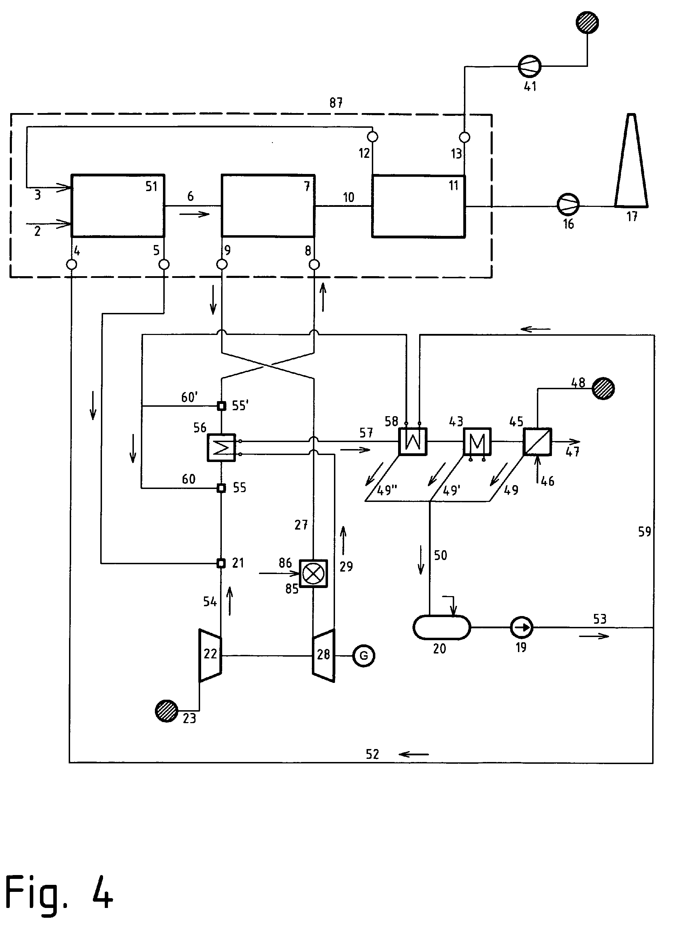

In the alternative design according to Fig. 4, the power cycle consists of cooled heat aggregate 51, e.g. a heating furnace with evaporative cooling, but also cooled combustion chambers, with fuel supply 2 and with combustion air supply 3, further with cooling medium supply 4 and cooling medium steam output 5, which is connected by means of hot flue gas duct 6 to the steam-gas mixture heater 7 with supply 8 and outlet 9 of the steam-gas mixture, which is connected by means of flue-gas duct 10 to combustion air heater 11 with hot air outlet 12 and preheated air inlet 13. Behind the combustion air heater 11, further flue-gas fan 16 and stack 17 are connected. The cooling medium supply 4 is connected by means of the cooling medium supply pipe 52 to the cooling medium discharge pipe 53 with feed pump 19, which is connected to the cooling medium tank 20. The outlet of the cooling medium steam 5 is connected to mixing unit 21, which is connected both to the output of compressor 22 and to the steam-gas mixture inlet 8 by means of steam-gas pipe 54, in which is the mixing cooler 55, further the regeneration exchanger 56 and the mixing cooler 55. The inlet pipe (27) serves for outlet 9 of the steam-gas mixture, in which gas burner 85 can be placed, connected to the input of gas turbine 28, the output of which is connected by means of output pipe 29 of the steam-gas mixture to the input of regeneration exchanger 56. The regeneration exchanger is connected, by means of the connecting pipe 57 with preheater 58 of the injected medium and the hot service water heater 43, to separation condenser 45, which is connected on the side of the working medium output to the working medium exhaust pipe 48 and on the side of the condensate, to the condensate pipe 49, which is fed together with condensate pipes 49' and 49" from the hot service water heater 43 and preheater 58 of the injected medium into the condensate collecting pipe 50, which is connected to the cooling medium tank 20. The pressure pipe 59 of the injected medium is connected to the cooling medium discharge pipe 53, which is connected to the input of the preheater 58 of the cooling medium, the output of which is connected to the mixing cooler 55 and 55' by means of injection pipes 60 and 60'.

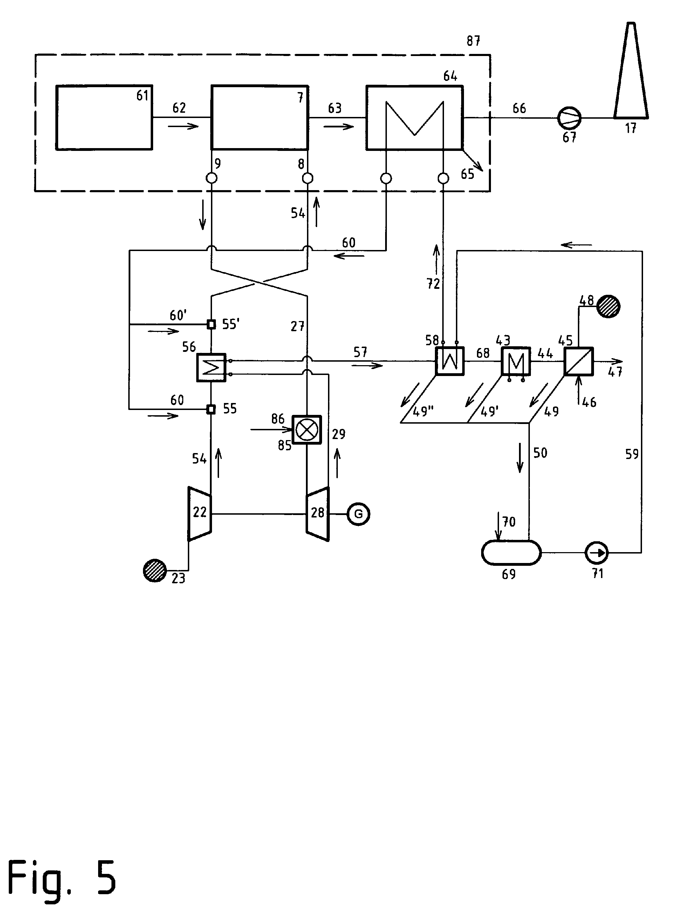

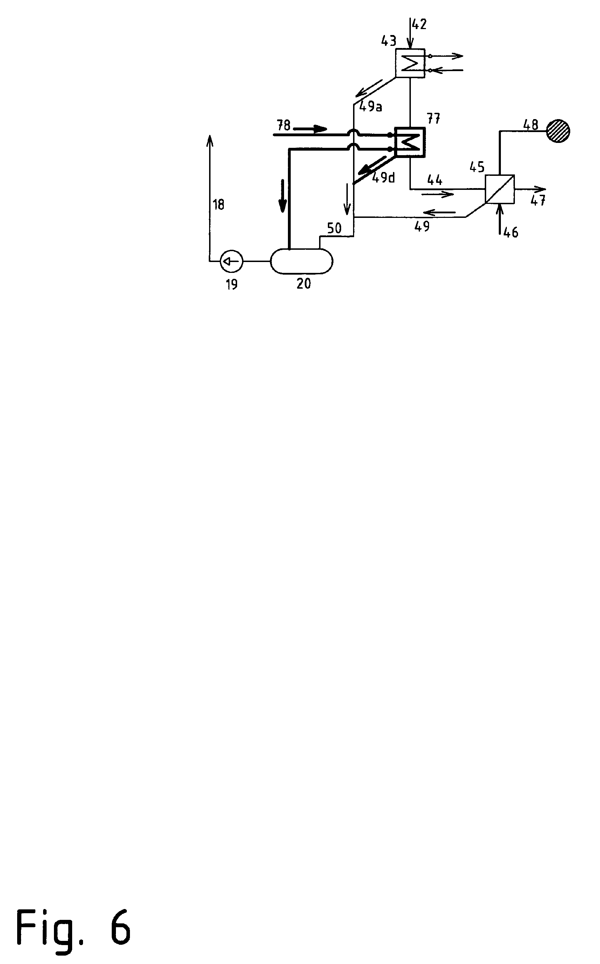

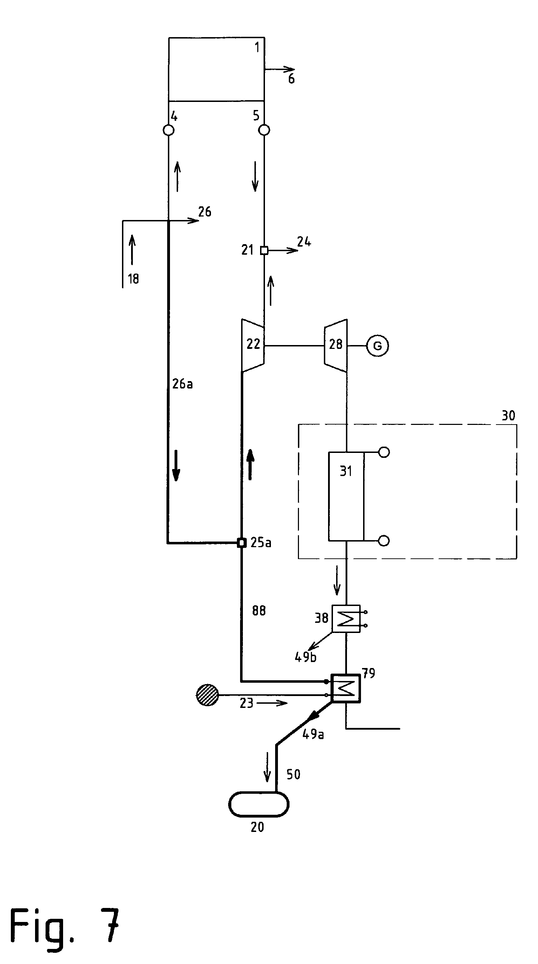

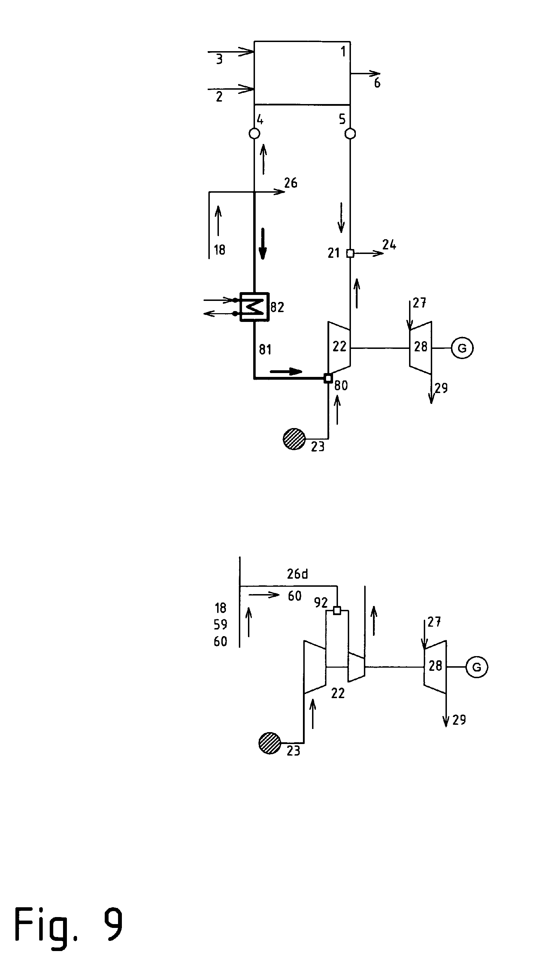

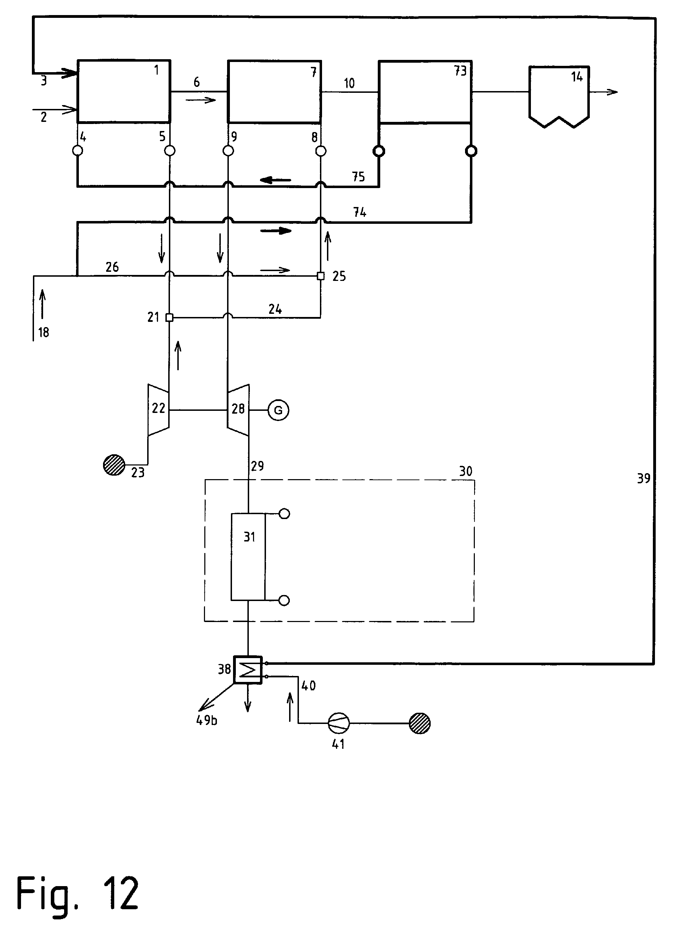

In the alternative design according to Fig. 5, the power cycle consists of aggregate 61 producing the flue gas or a mixture of gases at the necessary temperature, e.g. from the heating furnace, a high-temperature fuel cell, which is connected to the steam-gas mixture heater 7 by means of the gas duct 62, further by means of gas pipe 63 to the injected medium heater 64 with the contaminated condensate output 65 and further by means of outlet duct 66 with suction fan 67 to stack 17. The steam-gas mixture 8 is supplied by means of steam-gas pipe 54, where the mixing cooler 55', regeneration exchanger 56 and mixing cooler 55, are connected to the outlet of the compressor 22 with suction pipe 23. Outlet 9 of the steam-gas mixture is connected to the input of the gas turbine 28 by means of the supply pipe 27, in which gas burner 85 can be placed with the generator, the output of which is connected by means of steam-gas mixture output pipe 29 to the input of the steam-gas mixture into regeneration exchanger 56, the steam-gas mixture output of which is connected by means of connecting pipe 57 to injected medium preheater 58. The injected medium preheater is connected by means of outlet pipe 68 to the hot service water heater 43 and by means of outlet pipe 44 to separation condenser 45, the operating medium output of which is connected to operating medium exhaust pipe 48 and the output of the condensate is connected to condensate pipe 49. This is fed together with condensate pipes 49' and 49" from the heating service water heater 43 and the injected medium preheater 58 into condensate collecting pipe 50, which is connected to injected medium provision tank 69 with additive injected medium inlet 70. The injected medium provision tank 69 is connected by means of pressure pipe 59 with injection pump 71 to the injected cooling medium preheater 58. The injected cooling medium preheater is connected to the input of the injected medium heater 64 by means of the input pipe 72, the output of which is connected to mixing coolers 55 and 55' by means of the injected medium pipes 60 and 60'.
In this alternative connection in the alternative design, connections according to the alternative designs in Fig. 6 can be applied, for the preheating of the additive cooling medium from the additive medium input pipe 78, further in Fig. 7 for the preheating of air before compressor 22, in Fig. 9 for the isothermal compression at compressor 22 and in Fig. 12 for increasing of the temperature before gas turbine 28.

In the alternative design according to Fig. 6, heat exchanger 77 is placed before the separation condenser 45 for preheating the additive cooling medium, which is connected on the side of the cooling medium input to input pipe 78 of the additional cooling medium and it is connected on the output side of the cooling medium to the cooling medium tank 20.

In the alternative design according to Fig. 7, heater 79 of the suction operation gas is placed behind the combustion air preheater 38, which is connected on the side of the gas input to suction pipe 23 and on the side of the gas output to connecting pipe 88, which is connected to compressor 22, with the injection cooler 25a, which is connected by pipe 26a of the injected medium to cooling medium pipe 18.

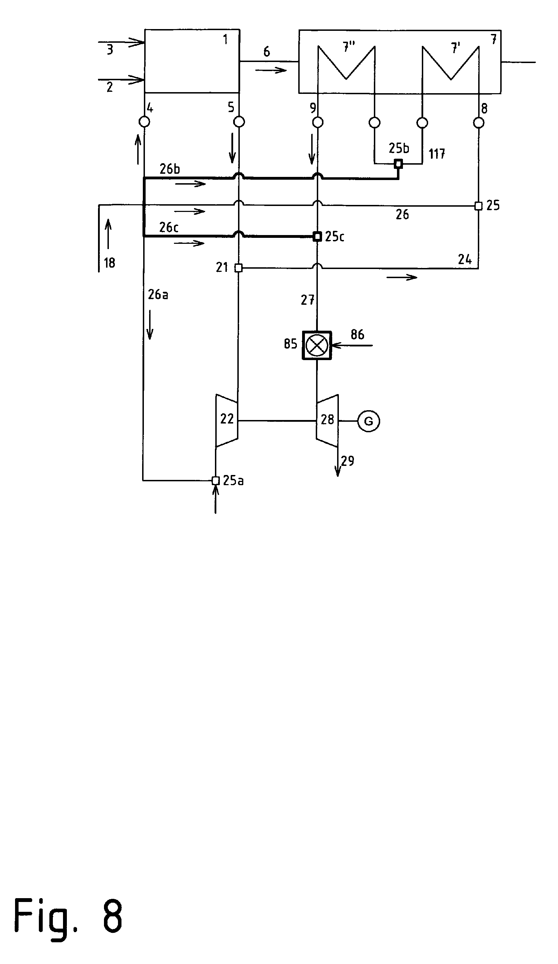

In the alternative design according to Fig. 8, the injection cooler 25b is placed between parts 7', 7" of the heater 7 of the steam-gas mixture and the cooler 25c is placed in input pipe 27, where gas burner 85 can be placed, whereas the injection coolers are connected to the cooling medium pipe 18 by means of injection medium pipes 26b and 26c. At the same time, the steam-gas mixture heater 7 can have more parts than the two in the figure, e.g. membrane walls, sections of the heater convection part, parts of the heater's radiant part and more injection coolers 25b can be placed between them than illustrated.

In the alternative design according to Fig. 9, sprayer 80 of the cooling medium for isothermal compression is placed in the suction part of compressor 22, which is connected by means of the pipe 81 of the sprayed medium, in which heat exchanger 82 for the heating of the sprayed medium is built-in, to the cooling medium pipe 18 and/or according to the lower part of Fig. 9 between the single stages of compressor 22, the number of which can be higher than suggested, the mixing intermediate cooler 92 is placed, which is connected by means of cooling medium pipe 26d, or by means of injection pipe 60, to cooling medium pipe 18, if needed to pressure pipe 59, or to injection pipe 60.

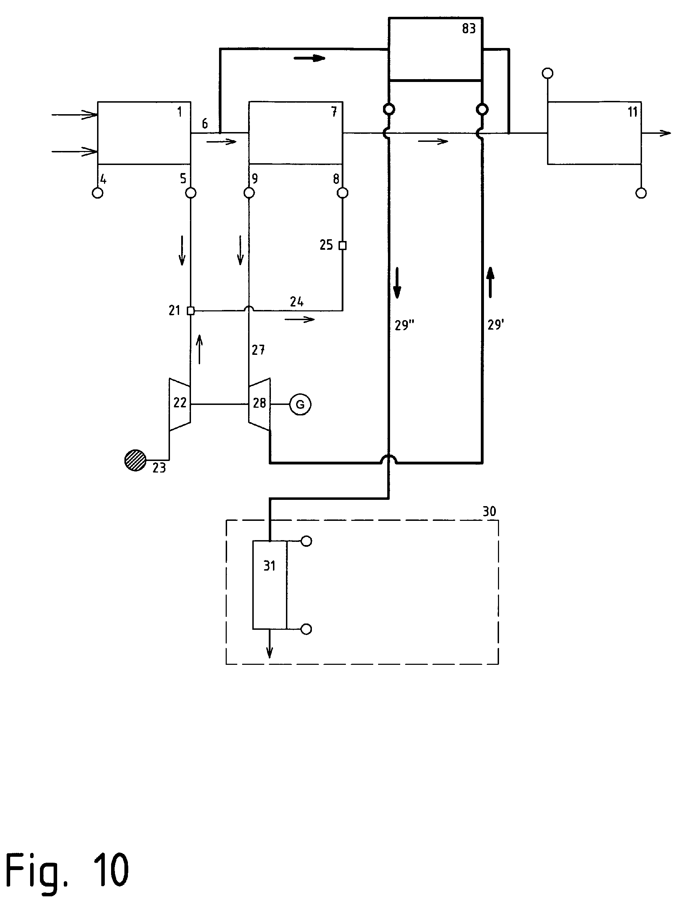

In the alternative design according to Fig. 10, in the flue gas flow from the cooled combustion chamber 1 together with steam-gas mixture heater 7, e.g. parallel or otherwise, preheater 83 of the steam-gas mixture is placed, which is connected on the input side by means of output pipe 29' to the output of gas turbine 28 and on the output side by output pipe 29" to the input of steam generator 31, whereas the steam-gas mixture preheater 83 can be designed from several parts.

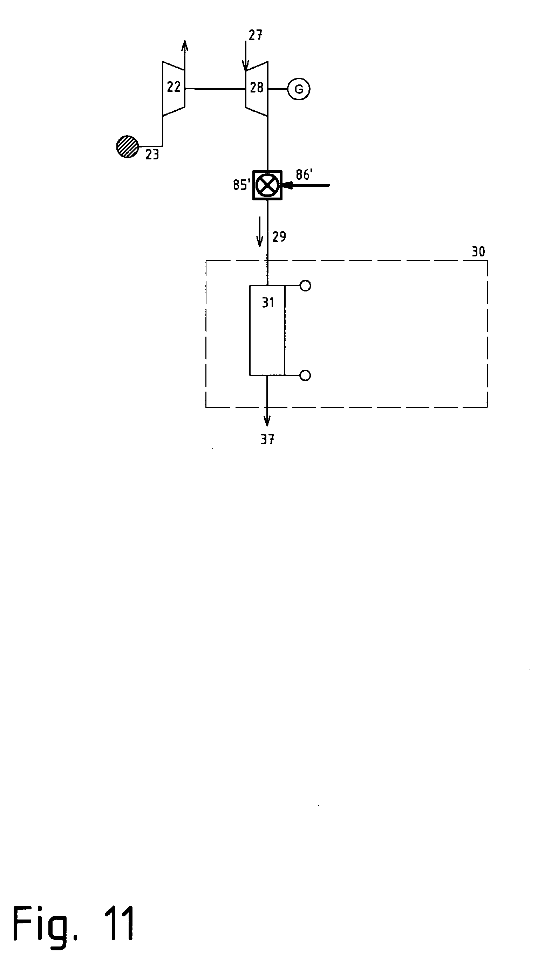

In the alternative design according to Fig. 11, built-in to output pipe 29 of the steam-gas mixture before the steam generator 31 is device 85' for additive combustion, e.g. a combustion chamber or a burner, which is connected to fuel supply 86' for gas or liquid fuel, e.g. natural gas.

In the alternative design according to Fig. 12, placed behind heater 7 of the steam-gas mixture is flue-gas heater 73 for the cooling medium, which is connected by means of connecting pipe 74 to cooling medium pipe 18 and by means of the connecting pipe 75 to the cooling medium inlet 4 of the cooled combustion chamber 1.

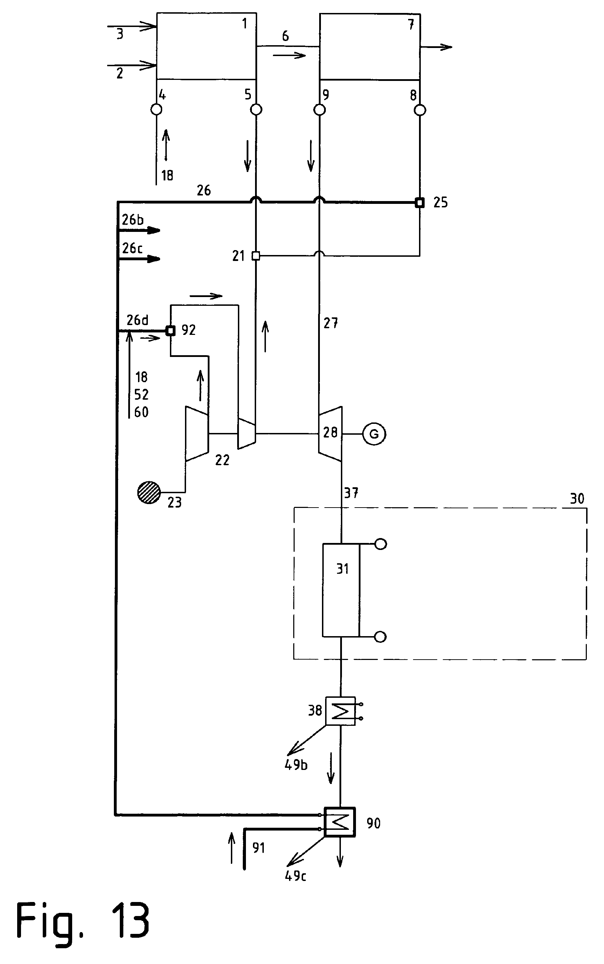

In the alternative design according to Fig. 13, placed in the steam-gas mixture, e.g. behind the preheater 38 of combustion air is exchanger 90 for heating the injected medium, which is connected at the input of the injected medium to supply pipe 91, by means of which the injected medium is supplied, e.g. cold condensate, and at the outlet, it is connected to injection medium pipe 26, or 26b, 26c, or to the injection medium pipe 26d, which is connected to the intermediate mixing gas coolers 92 between the single stages of compressor 22. The intermediate mixing coolers 92 can be connected by means of pipe 26d alternatively to the cooling medium pipe 18 or also to the pressure pipe 52 or to the injection pipe 60.

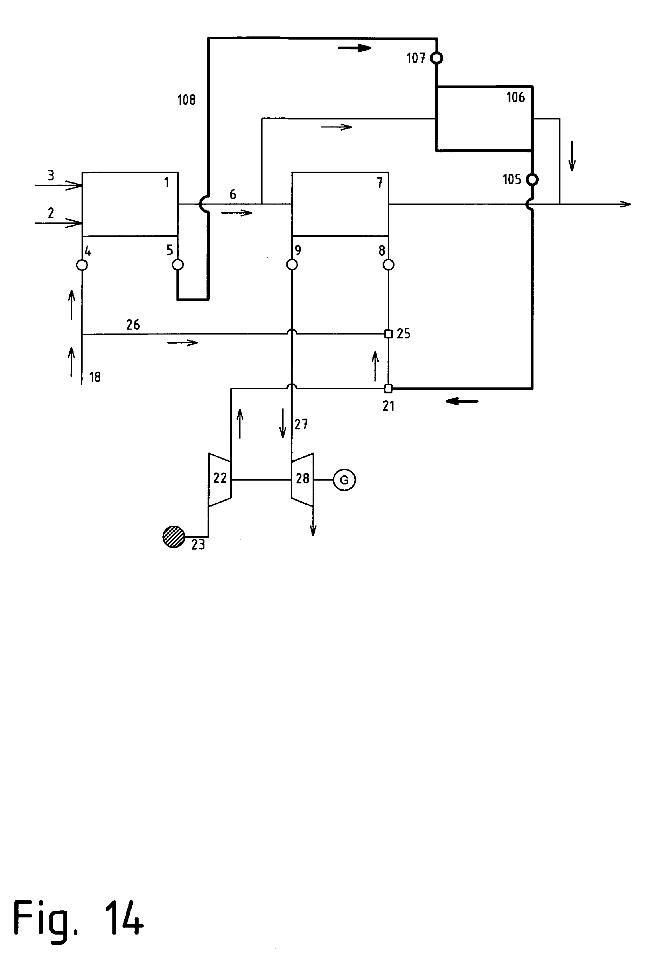

In the alternative design according to Fig. 14, placed in the flue gas flow behind the uncooled combustion chamber 1 together with heater 7 of the steam-gas mixture, e.g. parallel or otherwise, is superheater 106 of the cooled medium steam, steam input 107 of which is connected to the output 5 of the cooling medium steam from the cooled combustion chamber 1 and the outlet of cooling medium steam 105, which is connected to mixing unit 21. The steam superheater 106 can also be designed from several parts, which can be designed, e.g. as membrane walls, suspended pipes, plate areas or serpentine systems.

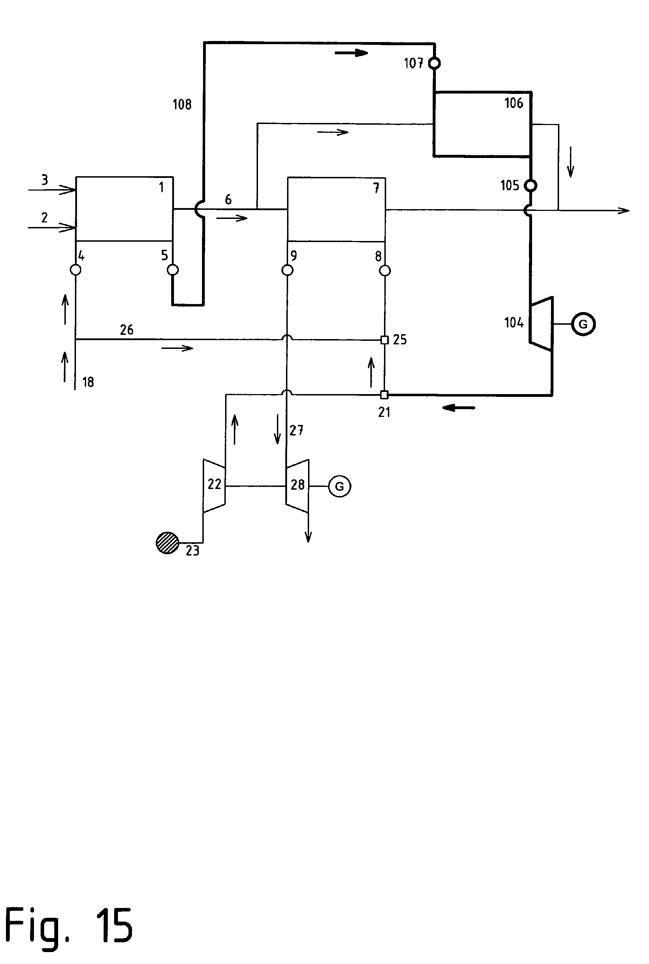

In the alternative design according to Fig. 15, the power cycle consists of the back-pressure steam turbine 104, which is connected at the steam output to the mixing unit 21 and is connected at the steam input to steam outlet 105 from the steam superheater 106, the steam input 107 of which is connected to the output 5 of the steam of the cooling medium from the cooled combustion chamber 1, whereas the steam superheater 106 is connected on the flue gas side parallel to the steam-gas mixture heater 7 or at least to some of its parts, alternatively it can be connected in series to some of the parts of the steam-gas mixture heater 7, or it can be connected in a parallel or serial connection combination. The steam superheater 106 is designed in the same way as in Fig. 14, however, the steam pressure is greater and it corresponds to the steam pressure at the input to the back-pressure steam turbine 104.

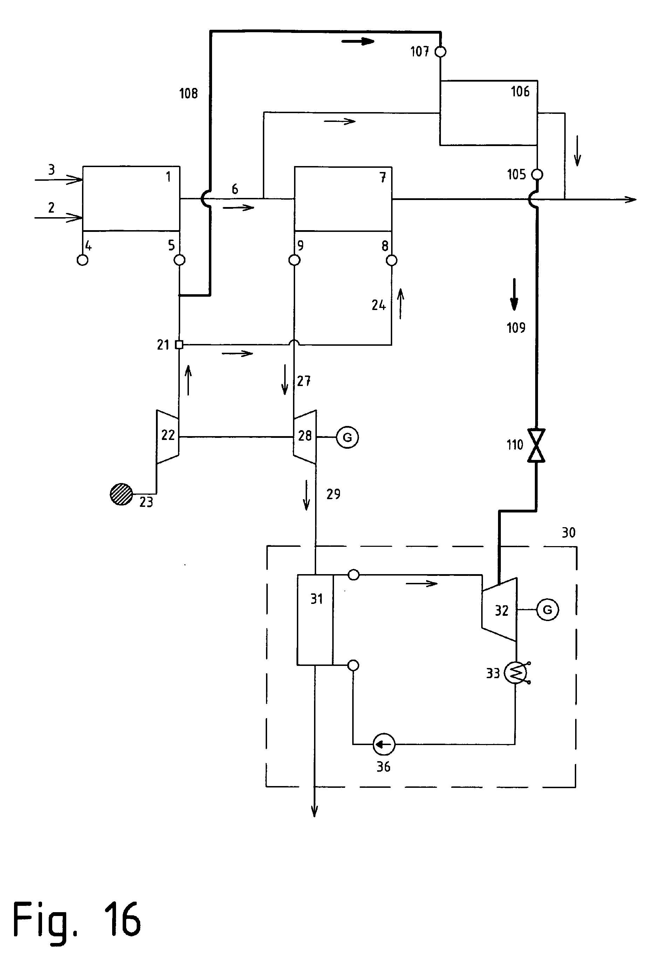

In the alternative design according to Fig. 16, the steam input 107 to the cooling medium superheater 106, which is designed, e.g. according to Fig. 14, is connected by means of the supply steam pipe 108 to the installation between the cooling medium steam output 5 and the mixing unit 21, and the cooling medium steam output 105 from the cooling medium superheater 106 is connected by means of the output steam pipe 109, in which are flow control devices 110, to the steam turbine 32 of the installation 30 of the Rankine-Clausius steam cycle.

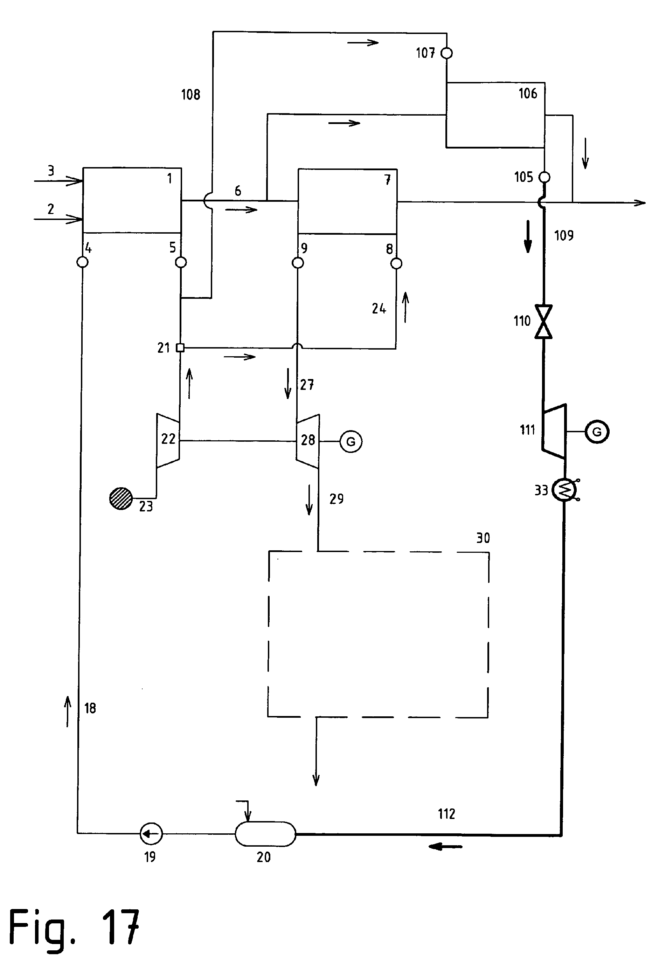

In the alternative design according to Fig. 17, the steam output 105 from the cooling medium steam superheater 106, e.g. in the design according to Fig. 14, is connected by means of the output steam pipe 109, with flow control devices 110, to the condensing steam turbine 111 with the condenser 33, the output of which is connected by means of the condensate pipe 112 to the cooling medium tank 20. The pressure of the steam at the input into the condensing steam turbine 111 corresponds to the pressure of the gas behind the compressor 22.

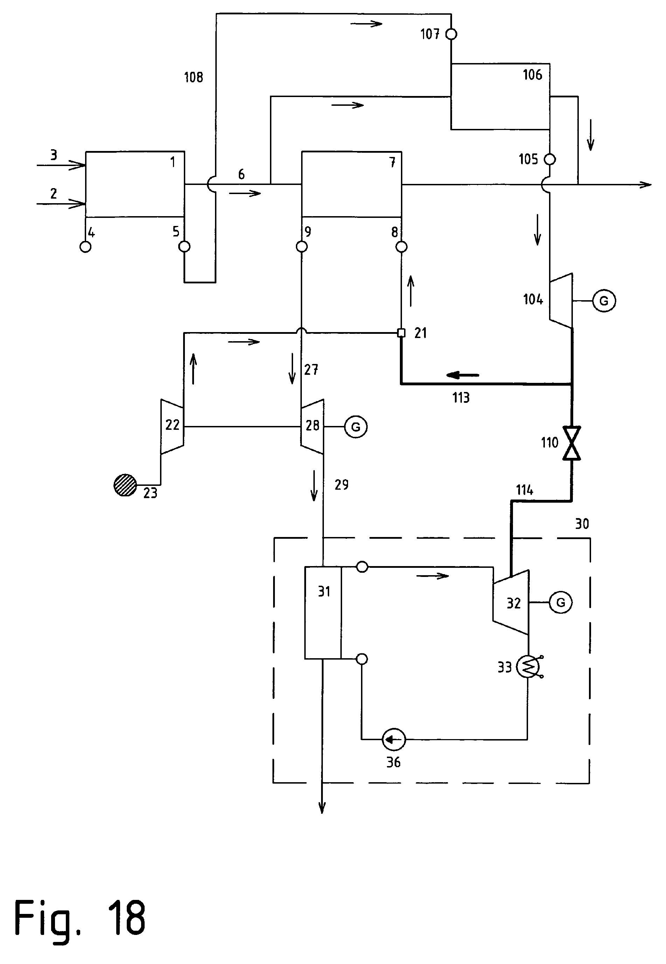

In the alternative design according to Fig. 18, the output from the back-pressure turbine 104, in the design, e.g. according to Fig. 15, is connected to the mixing unit 21 by means of main pipe 113 and by means of the branching pipe 114, with flow control devices 110, to the steam turbine 32 of the installation 30 of the Rankine-Clausius cycle. At the output of the back-pressure turbine 104, there is pressure that corresponds to the pressure of the gas behind the compressor 22.

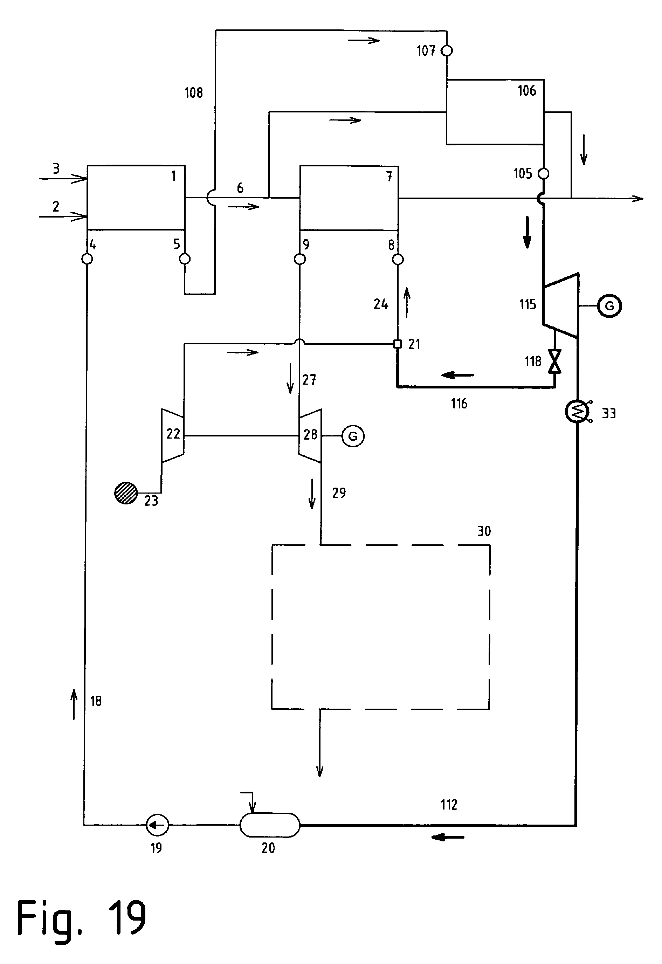

In the alternative design according to Fig. 19, the steam output 105 from the cooling medium steam superheater 106, in the design, e.g. according to Fig. 15, is connected to the condensing turbine 115 with the controlled intake 118, which is connected by means of the extraction pipe 116 to the mixing unit 21 and the outlet of the condenser 33 is connected by means of the condensate pipe 112 to the cooling medium tank 20. The pressure at the input into the condensing turbine 115 is greater than the pressure of the gas at the output from the compressor 22 and the pressure in the controlled intake 118 corresponds to this pressure.

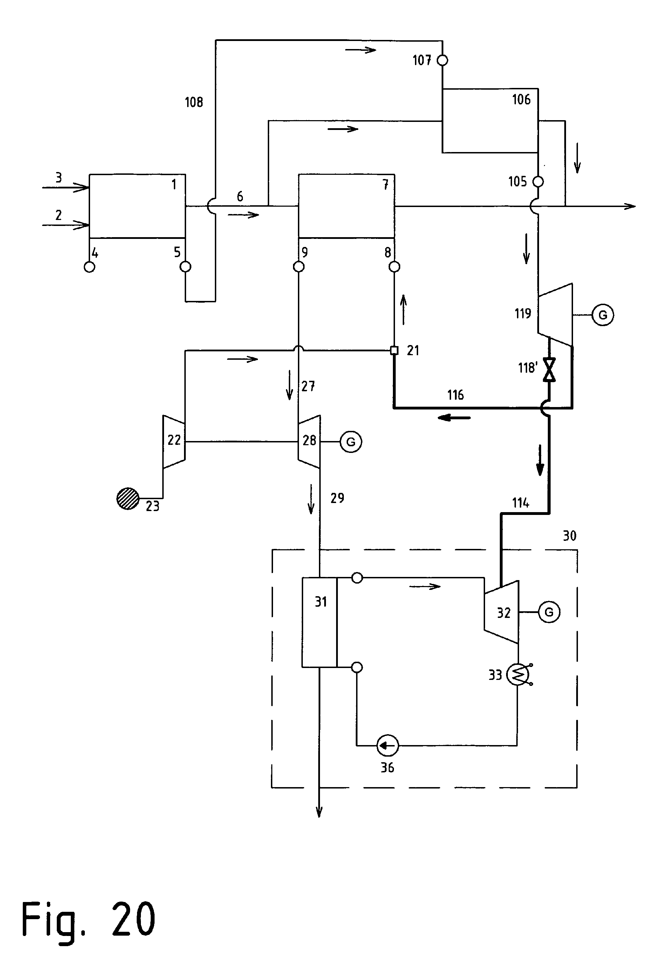

In the alternative design according to Fig. 20, the steam output 105 from the cooling medium steam superheater 106, e.g. in the design according to Fig. 15, is connected to the back-pressure turbine 119 with controlled intake, the output of which is connected by means of the extraction pipe 116 to the mixing unit 21 and the controlled extraction 118' is connected by means of the branching pipe 114 to the steam turbine 32 of the installation 30 of the Rankine-Clausius cycle. The pressure at the input of the back-pressure turbine 119 and also the pressure in the controlled extraction are greater than the pressure of the gas at the output from the compressor 22, the pressure on the output from the back-pressure turbine 119 corresponds to the pressure at the outlet from the compressor 22.

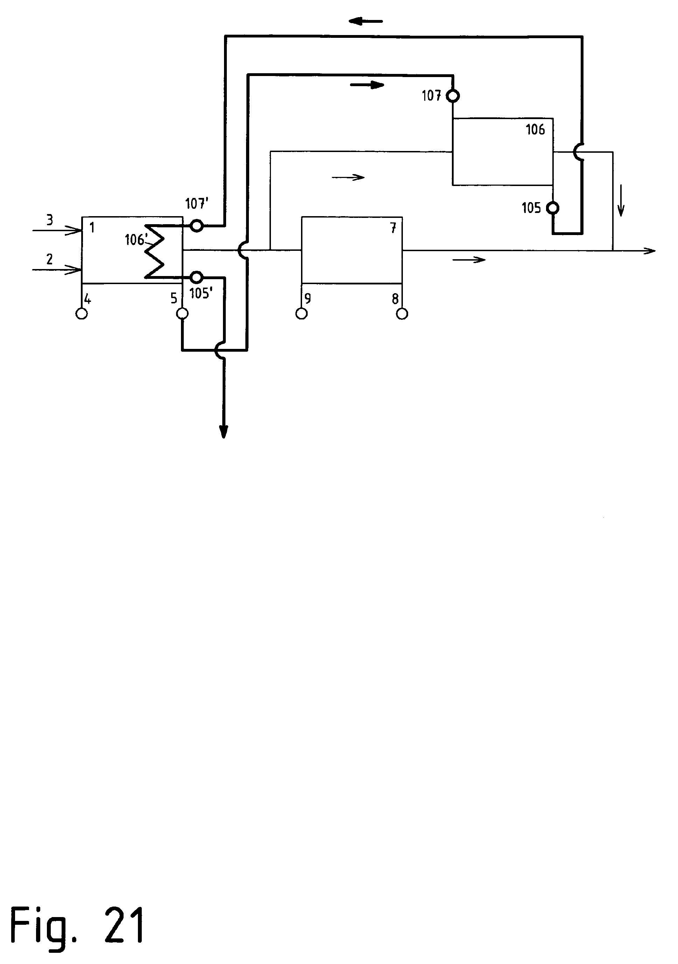

In the alternative design according to Fig. 21, the cooling medium steam superheater 106, e.g. according to Fig. 14 as well as Fig. 15, can be designed from several parts, whereas at least one of its parts 106', e.g. the outlet part, is placed in the cooled combustion chamber 1 and input 107 of the steam superheater 106 is connected to steam output 5 of the cooled combustion chamber 1 and its steam output 105 from the previous part is connected to the input 107' of the output part of the superheater 106', the output 105' of which can be connected to the mixing unit 21 or to the back-pressure turbine 104 or to the steam turbine 32 or to the condensing turbine 111 or to the condensing turbine 115 with controlled intake or to back-pressure turbine 119 with controlled intake.

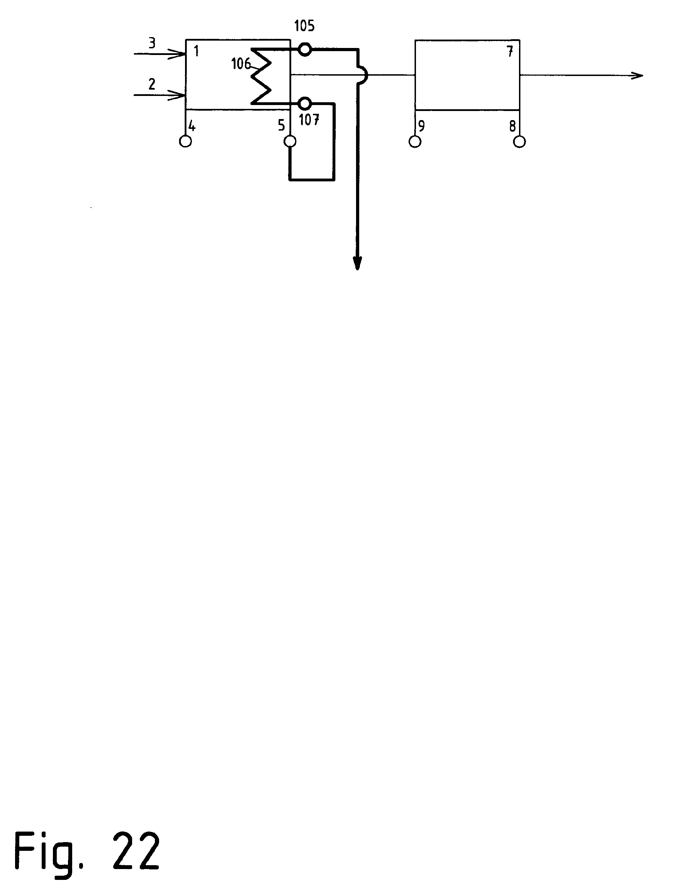

In the alternative design according to Fig. 22, the entire cooling medium steam superheater 106, placed in the cooled combustion chamber 1 and its input 107, are connected to the cooling medium steam output 5 from the cooled combustion chamber 1 and its cooling medium steam output 105 can be connected to the mixing unit 21 or to the back-pressure turbine 104 or to the steam turbine 32 or to condensing turbine 111 or to condensing turbine 115 with controlled intake or to back-pressure turbine 119 with controlled intake.

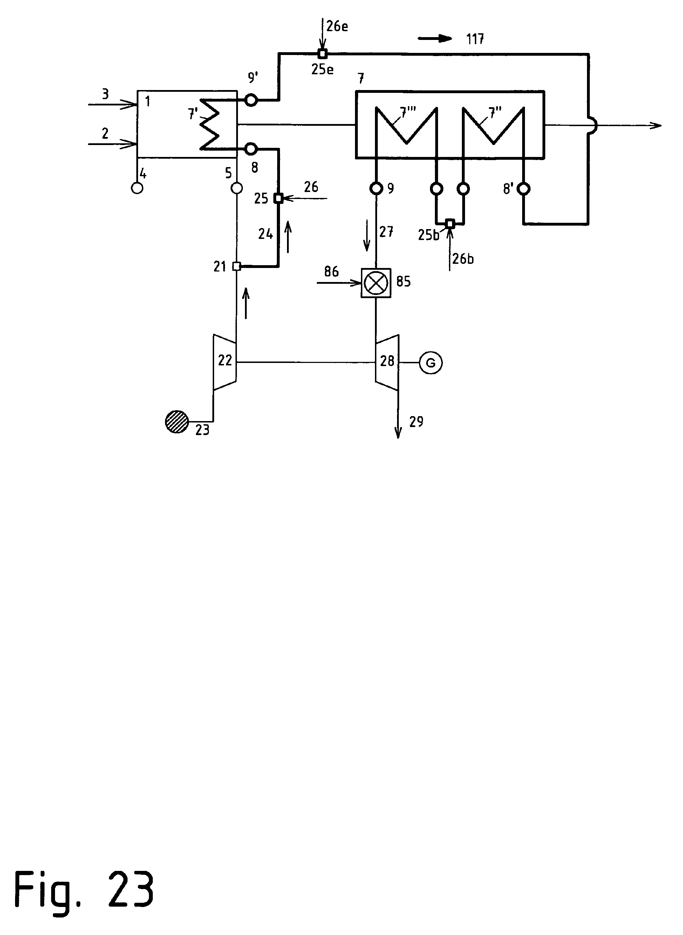

In the alternative design according to Fig. 23, the steam-gas mixture heater 7 is divided into several parts, e.g. 7', 7", and 7"', whereas its input part 7' is placed in the cooled combustion chamber 1 and its steam-gas mixture input 8 is connected by means of connecting pipe 24, in which the injection cooler 25 can be placed, to the mixing unit 21 and its steam-gas mixture outlet 9' is connected by means of the inner pipe 117, in which an injection cooler 25e can be placed, to the steam-gas mixture inlet 8' of the subsequent part 7" of the steam-gas mixture heater 7. The steam-gas mixture leads behind the injection cooler 25b to the output part 7"' of the steam-gas mixture heater, the steam-gas mixture outlet 9 is connected by means of supply pipe 27, in which a device 85 for additional combustion of gas can be placed, to the steam turbine 28.

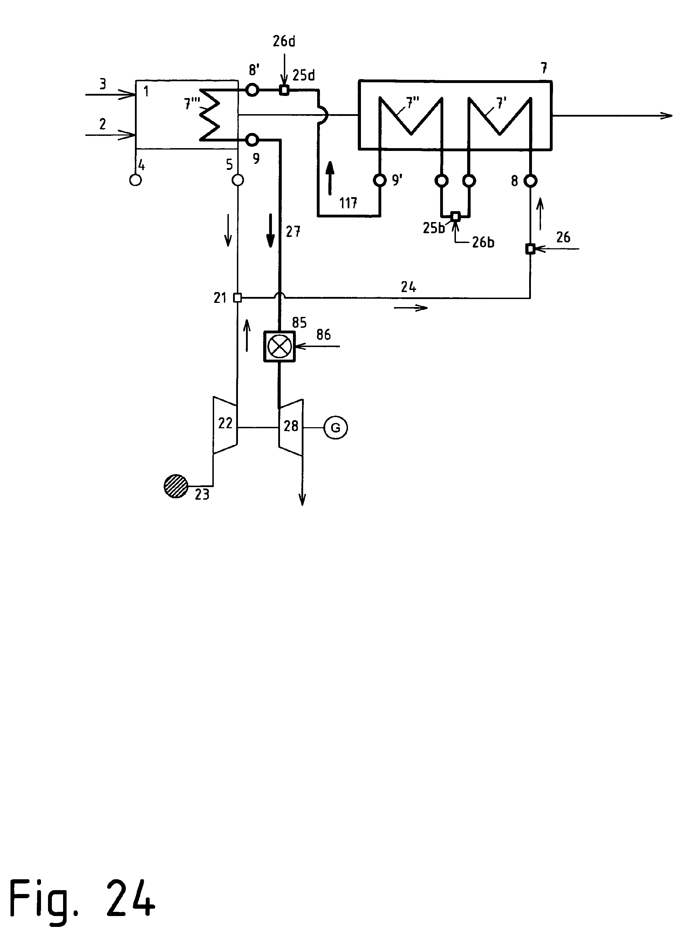

In the alternative design according to Fig. 24, the steam-gas mixture heater 7 is divided into more parts, e.g. 7', 7", and 7"', whereas its output part 7''' is placed in the cooled combustion chamber 1 and its steam-gas mixture input 8 is connected by means of the inner pipe 117, in which the injection cooler 25d may be placed, connected to the steam-gas mixture outlet 9' from the previous part 7" of the steam-gas mixture heater 7, whereas its outlet 9 of the steam-gas mixture is connected to the steam turbine 28 by means of the supply pipe 27, in which the device 85 for the additional combustion of gas can be placed.

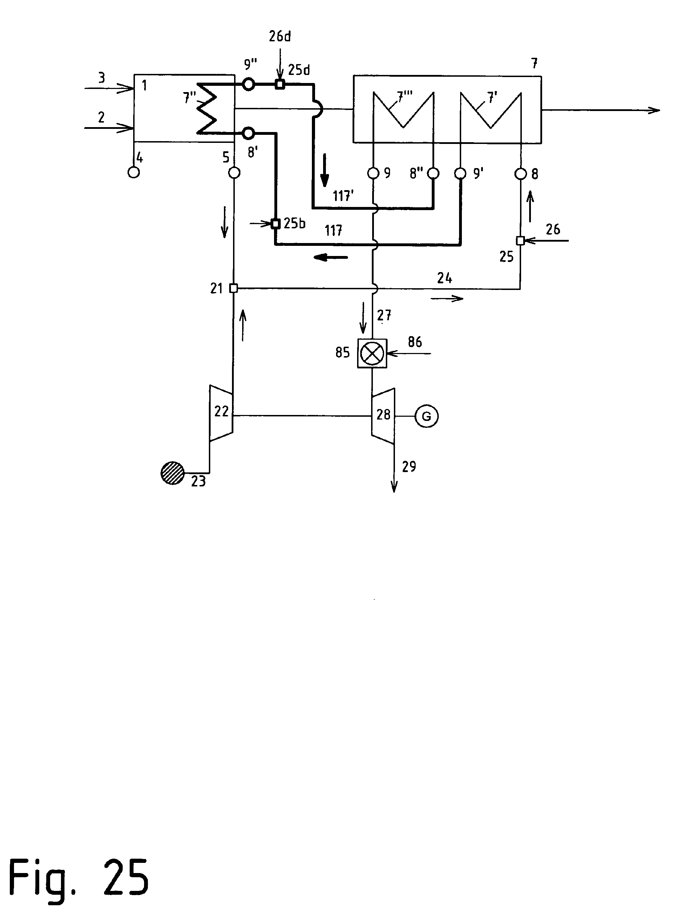

In the alternative design according to Fig. 25, the steam-gas mixture heater 7 is divided into more parts, e.g. 7', 7", and 7"', whereas some of its inner parts, e.g. 7", is placed in the cooled combustion chamber 1 and its steam-gas mixture inlet 8' is connected by means of the inner pipe 117, in which the injection cooler 25b can be placed, to the steam-gas mixture outlet 9' from the previous part 7' of the steam-gas mixture heater 7 and its steam-gas mixture outlet 9" is connected by means of the inner pipe 117', in which the injection cooler 25d can be placed, to the steam-gas mixture inlet 8" of the subsequent part 7'" of the steam-gas mixture heater 7, whose outlet 9 of the steam-gas mixture is connected to the gas turbine 28 by means of the supply pipe 27, in which device 85 for additional combustion of gas can be placed.

In the power cycle according to the design in Fig. 1, fuels are used as the primary power sources, such as fossil fuels, e.g. coal and alternative fuels, e.g. biomass and also wastes, which are supplied by means of fuel supply 2 into the cooled combustion chamber 1. The combustion chamber is of common construction, applicable for the combustion of the fuel mentioned above, e.g. with stoker fired, pulverized fuel, gas, oil, or fluidized bed furnace, with combustion with air or oxygen, or with any suitable furnace, the walls of which are cooled by the evaporation of the cooling medium, e.g. treated water. The size of the combustion chamber is designed in such a way that the flue gas temperature is highest upon output, but does not exceed the ash fusing point, e.g. 1100°C. From the point of view of emissions, commonly used precautions are implemented for the furnace type for reducing the generation of harmful substances and their amount. Flue gases are further significantly cooled to the output temperature on the way from the steam-gas generator 87 to the stack 17 in the steam-gas mixture heater 7.
The cooling medium for cooling the combustion chamber 1 is taken from the cooling medium tank 20 and is forwarded by means of feed pump 19 and the cooling medium pipe 18 to the cooling medium supply 4 and the generated steam extracted from the cooling medium output 5 is mixed in the mixing unit 21 with the pressurized air from compressor 22, which means that the pressure in the cooling system of the cooled combustion chamber 1 complies with the output pressure of the compressor 22.
The generated steam-gas mixture leads by means of the connecting pipe 24 to the steam-gas mixture heater 7, whose heat transfer surface can be divided into several parts, where it is heated to the minimum temperature suitable for the gas turbine 28, which is, e.g. at least 800°C up to 950°C, depending on the combusted fuel in the cooled combustion chamber 1. Before the input of the steam turbine 28, the steam-gas mixture can be heated in device 85 for additional fuel burning, e.g. natural gas, to a higher temperature, e.g. 1,200°C up to 1,300°C.
After expansion in steam turbine 28, the heat of the steam-gas mixture is further utilized in installation 30 of the Rankine-Clausius cycle for obtaining additional power, particularly in the heat recovery steam generator 31 (HRSG), in which the produced steam is further utilized in the steam turbine 32 and the developed low-temperature condensate is returned by means of the feeding pump 36 from the condenser 33 into the steam generator 31.
Due to the low temperature of the input condensate, part of the steam from the steam-gas mixture at the cold end of the steam generator 31 can condense and the condensate can be passed by means of the pipe 49c through the collecting pipe 50 into the cooling medium tank 20.

In the power cycle according to the sample design in Fig. 2, the perceptible heat of waste gas or a mixture of gases of various, mostly uncooled, aggregates 61, such as, e.g. furnaces, high-temperature fuel cells, piston engines, is utilized as the primary power source. This perceptible heat is utilized in the steam-gas mixture heater 7 for heating the steam-gas mixture to the working temperature of gas turbine 28.
The air from compressor 22 is conducted into inlet 8 of the steam-gas mixture heater 7, whereas it is first cooled gradually by the evaporation of the injected medium in the mixing cooler 55 as closely as possible above the dew point of the generated steam-gas mixture, afterwards the developed steam-gas mixture is heated in the regeneration exchanger 56 and is subsequently cooled by evaporating the injected medium in the mixing cooler 55', but again as closely as possible above the dew point of the steam contained in the mixture.
The steam-gas mixture generated in this manner heats up in the steam-gas mixture heater 7 to the temperature necessary for the gas turbine, e.g. 800°C, or it heats up to the maximum possible temperature, and it heats up to the temperature necessary for the gas turbine 28 in device 85 for the additional burning of fuel, e.g. natural gas. After expansion in gas turbine 28, a considerable part of the residual heat of the steam-gas mixture is utilized before the outlet of the exhaust pipe 48 for its preheating in the regeneration exchanger 56.

In the power cycle according to the alternative design in Fig. 3, the primary source of power is the combusted fuel, similarly as in the sample design according to Fig. 1.
The flue gas leaving the cooled combustion chamber 1 is further cooled significantly in the steam-gas mixture heater 7 and it cools to the output temperature from the steam-gas generator 87 in the combustion air heater 11.
The flue gas exhaust into stack 17 is ensured by means of flue-gas fan 16; the flue gas treatment takes place in the separator (or filter) 14 of solid pollutants and in the flue gas purification facility 15.
The combustion air drawn by the combustion air fan 41 is heated in the combustion air preheater 38 to the necessary temperature, at least for the elimination of low temperature corrosion of the combustion air heater 11 and it is heated to the necessary temperature for combustion in the combustion air heater 11; or the temperature of the heating of the air is selected to achieve the necessary flue-gas temperature behind the steam-gas mixture heater 7.
The cooling medium for cooling combustion chamber 1 is taken from the cooling medium tank 20 and is forwarded by means of feed pump 19 and by means of pipe 18 to the cooling medium inlet 4 and the generated steam drained from the output of the cooling medium 5 is mixed in the mixing unit 21 with the pressure air from the compressor 22, which means that the pressure in the cooling system of the cooled combustion chamber 1 complies with the output pressure of compressor 22.
The generated steam-gas mixture is cooled to the necessary temperature in the injection cooler 25 by means of the cooling medium, which is extracted by means of the injected medium pipe 26 from the cooling medium pipe 18 .This temperature is lower than the temperature of the flue gas leaving the steam-gas mixture heater 7, but must be higher than the dew point of the steam in the forwarded steam-gas mixture and after cooling, it is conducted into the steam-gas mixture inlet 8 of the steam-gas mixture heater 7.
In the steam-gas mixture heater 7, whose heat-exchanging surface can be divided into several parts, the steam-gas mixture is heated to a temperature suitable for the steam turbine 28, e.g. to 800°C, or it is heated to the maximum possible temperature and to the necessary temperature for the gas turbine, it is heated in device 85 for the additional burning of fuel, e.g. natural gas, and at this temperature it is conducted to the input of the gas turbine 28 with the generator.
After the expansion in the gas turbine 28, the heat of the steam-gas mixture is further utilized in installation 30 of the Rankine-Clausius cycle for gaining additional power, specifically in the heat recovery steam generator 31. The steam produced in the heat recovery steam generator is utilized in the steam turbine 32 and the developed low-temperature condensate is returned by means of feeding pump 36 from the condenser 33 back into the steam generator 31.
Due to the low temperature of the condensate, part of the steam from the steam-gas mixture can condense at the cold end of the steam generator 31; in that case, the developed condensate is drained by condensate pipe 49c into the condensate collecting pipe 50.
Further utilization of the residual heat of the steam-gas mixture and obtaining further condensate takes place in the combustion air preheater 38, where the combustion air is preheated at least to the necessary temperature for the elimination of low-temperature corrosion at the combustion air heater 11, but primarily, a further part of the steam from the steam-gas mixture condenses here.
The condensate is drained by means of condensate pipe 49b into the condensate collecting pipe 50 and the residual heat of the remaining steam-gas mixture from the combustion air preheater 38 is further partly utilized for heating service hot water in the service water heater 43, which is included only if service hot water is required.
The generated condensate is drained by means of condensate pipe 49a into the condensate collecting pipe 50 and the remaining steam-gas mixture from the warm service water heater 43 is conducted into the separation condenser 45, in which the possible remaining part of the steam condenses.
The generated condensate is drained by means of condensate pipe 49 to the condensate collecting pipe 50, by means of which it is forwarded into the cooling medium tank 20 and the separated operating medium (humid air) is discharged into the atmosphere by means of the operating medium exhaust pipe 48.
Separation condenser 45 is included only if the steam amount in the steam-gas mixture behind the warm service water heater 43, or behind the combustion air preheater 38 in the absence of heater 43, is significantly higher than the steam amount in the air drawn by means of the suction pipe 23 and therefore the operating costs for adding cooling medium to tank 20 would be high. For example, air can be utilized as the cooling medium supplied to the cooling medium input 46 of the separation condenser 45.

In the power cycle according to the sample design in Fig. 4 in the cooled heat aggregate 51, which can be, e.g. a heating furnace with evaporative cooling or also a cooled gas combustion chamber used as a generator of the hot gas, fuel supplied by means of fuel inlet 2 is combusted with combustion air, which is heated to the necessary temperature by the flue gas in the combustion air heater 11 and is supplied by the combustion air inlet 3.
The eventual protection of the combustion air heater 11 against low-temperature corrosion is realized in a common way, e.g. by means of air preheating before input 13 of the preheated air by the extracted steam, or by re-circulating the heated air from output 12 of hot air into suction or to the discharge of the combustion air fan 41, or by a combination of these methods.
The flue gas from the cooled heat aggregate 51, which is exhausted to stack 17 by means of the flue-gas fan 16, is significantly cooled in the steam-gas mixture heater 7 and is then cooled to the outlet temperature on the way from the steam-gas generator 87 to the combustion air heater 11.
The cooling medium is forwarded from the cooling medium tank 20 by means of feed pump 19 to the cooling discharge pipe 53, from which part is then conducted by means of supply pipe 52 to inlet 4 of the cooling medium and after its evaporation in the cooled heat aggregate 51, the steam is conducted to the mixing unit 21, in which it is mixed with the air from the compressor 22 and the generated steam-gas mixture is conducted by means of the steam-gas pipe 54 to the steam-gas mixture inlet, whereas it is first cooled in the mixing cooler 55, but as closely as possible above the dew point of the steam in the generated steam-gas mixture, it is then heated in the regeneration exchanger 56 and is cooled again in the following mixing cooler 55' to a temperature lower than the temperature of the flue gas leaving the steam-gas mixture heater 7, but as closely as possible above the dew point of the steam in the transported steam-gas mixture.
In the steam-gas mixture heater 7, which is designed from several parts, the steam-gas mixture is heated by flue gas to a temperature suitable for steam turbine 28, e.g. to 800°C, or is heated to a maximum temperature and to the necessary temperature for the gas turbine, it is heated in device 85 for the additional combustion of fuel, e.g. natural gas, and after the expansion in the gas turbine 28, a considerable part of its residual heat is used further in the regeneration exchanger 56 for preheating the steam-gas mixture, whereupon after cooling to minimum temperature, an additional part of its residual heat is utilized in the injected medium preheater 58, in which by condensing part of the steam from the steam-gas mixture, further condensate is acquired, which is conducted by means of the condensate pipe 49" to the condensate collecting pipe 50.
The rest of the residual heat of the steam-gas mixture is utilized for heating service hot water in the service water heater 43, whereas an additional part of the condensate is obtained by condensing part of the steam from the steam-gas mixture, which is drained by means of pipe 49' into the condensate collecting pipe 50. The heater 43 for heating service water is included only if a hot water supply is required.
The eventual rest of the steam from the steam-gas mixture is condensed in the separation condenser 45 by the cooling medium, e.g. by air, and the subsequent condensate is conducted by means of condensate pipe 49 to the condensate collecting pipe 50, whereas the operating medium with the rest of the steam (humid air) is discharged into the atmosphere by means of the operating medium exhaust pipe 48.
The separation condenser 45 is applied, like in the sample design according to Fig. 3, only if it is necessary to reduce operating costs for the water supply. The developed condensate is conducted by means of the condensate collection pipe 50 to the cooling medium tank 20 and part of it is drawn from the discharge pipe 53 as injection medium and it is conducted by means of pressure pipe 59 into the injected medium preheater 58, where it is heated and injected into the mixing coolers 55 and 55' by means of the injection pipes 60 and 60'.

In the power cycle in the sample design according to Fig. 5, as the power source, the perceptible heat of waste gas or gas mixtures from various mostly uncooled aggregates 61, e.g. furnaces, high-temperature fuel cells, piston engines, is utilized. The major part of the perceptible heat is used in the steam-gas mixture heater 7 for its heating to the working temperature of the gas turbine 28 and the remaining part of the perceptible heat of the waste gas is used for preheating the injected medium in the injected medium heater 64.
The developed condensate of the steam contained in the flue gas is conducted through the condensate output 65 and is further utilized according to its degree of contamination.
The air from compressor 22 is conducted by means of steam-gas pipe 54 to the steam-gas mixture inlet 8, where it is first gradually cooled by evaporating the injected cooling medium in the mixing cooler 55 as closely as possible above the dew point of the steam contained in the generated steam-gas mixture, the generated steam-gas mixture is then heated in the regeneration exchanger 56 and is subsequently cooled by evaporating the injected cooling medium in the mixing cooler 55' to a temperature lower than the waste gas temperature at the output of the steam-gas mixture heater 7, but as closely as possible above the dew point of the steam contained in the mixture.
In the heater 7 of the steam-gas mixture, which can be designed of several parts, the steam-gas mixture is heated to the operation temperature of the gas turbine 28, e.g. to 800°C or is heated to a maximum temperature and to the temperature necessary for the gas turbine 28, it is heated in device 85 for additional combustion of fuel, e.g. natural gas, and after the expansion in the gas turbine 28, a considerable part of the residual heat of the steam-gas mixture is utilized for preheating in the regeneration exchanger 56. Another part of the residual heat is utilized for preheating the injected medium in the injected medium preheater 58, where part of the steam condenses and the developed condensate is conducted by means of the condensate pipe 49" to the condensate collecting pipe 50 and the rest part of perceptible heat of the steam-gas mixture is utilized in the service water heater 43, which is included only in case if the heating service water is required.
The developed condensate is drained by means of pipe 49' to the condensate collecting pipe 50 and the remaining part of the steam-gas mixture is conducted to the separation condenser 45, in which the eventual remaining part of the steam condenses and the developed condensate is conducted by means of the condensate pipe 49 into the condensate collecting pipe 50 and the remaining operation medium with the remaining amount of steam is discharged into the atmosphere by means of the operating medium exhaust pipe 48.
The separation condenser 45, like in the sample design according to Fig. 3 and Fig. 4, is included only if it is necessary to reduce operating costs for supplying the injected medium.

The separated condensate is conducted by means of the condensate collecting pipe 50 to reservoir 69 of the injected medium and by means of the injection pump 71, it is forwarded through the injected medium preheater 58 and injected medium heater 64 to the mixing cooler 55 and 55'.

The connection of the power cycle in the sample design according to Fig. 6 is utilized primarily if the additive cooling medium must be added continuously to the cooling medium tank 20.
The residual waste heat of the steam-gas mixture before the separation condenser 45 is thus partly utilized for preheating the cooling medium in tank 20; primarily, however, further condensate is obtained by the condensation of the part of the steam from the steam-gas mixture. The condensate is then drained by means of pipe 49d, so the consumption of the additive cooling medium is reduced.

In the connection of the power cycle in the sample design according to Fig. 7 for the utilization of the steam-gas mixture waste heat, e.g. behind the combustion air preheater 38, suction air heater 79 is included, in which the temperature of the suction air can be increased to such a value, at which the steam from the steam-air mixture still condenses and at which by means of its cooling in the injection cooler 25a during evaporation of all the injected medium from the pipe 26a at the input of the compressor 22, a temperature maximum approaching the temperature of the drawn air in the suction pipe 23 is reached.
The condensate developed when cooling the steam-gas mixture in the suction operation gas heater 79, is conducted by condensate pipe 49a through condensate collecting pipe 50 into the cooling medium tank 20.

In the power cycle in the sample design in Fig. 8, for reducing the temperature of the steam-gas mixture besides the already named injection coolers 25 and 25a, other injection coolers 25b are applied, which are placed according to need in the inner pipes 117 between the separate parts of the steam-gas mixture heater 7, which serve for the regulation of the steam-gas mixture temperature in the chosen parts 7', 7" of the heater 7, and further the injection cooler 25c, which is utilized for possible control of the parameters of the steam-gas mixture at the outlet from the steam-gas mixture heater 7 (temperature and the steam content in the mixture before the gas turbine).

In the power cycle in the sample design in Fig. 9, connection for isothermal compression is used at compressor 22, when according to the upper drawing at the input of the compressor in the cooling medium sprayer 80, the cooling medium is sprayed under the necessary pressure, drawn from, e.g. the cooling medium pipe 18, and heated in the heat exchanger 82 to the necessary temperature for evaporation in compressor 22.
For heating the cooling medium in the heat exchanger 82, the heat of the flue gas drawn from the cooled combustion chamber 1 or aggregate 51, the heat of the waste gas drawn from the heat aggregate 61, the waste heat of the steam-gas mixture from the gas turbine 28 or the heat taken off within the applied installation 30 of the Rankine-Clausius cycle can be utilized.
And/or if in the design according to the bottom drawing between the stages of compressor 22 in the intermediate mixing coolers 92, the cooling medium drawn from the cooling medium pipe 18 or from pressure pipe 59 or from the injection pipe 60 is injected, by means of which the operating medium in the appropriate stage of compressor 22 is cooled as closely as possible to the dew point of the steam of the cooling medium in the working medium of compressor 22.

In the power cycle in the sample design in Fig. 10, for increasing its efficiency, an increase is applied to the temperature of the steam-gas mixture before the input to steam generator 31, by means of its reheating by flue gas in the steam-gas mixture reheater 83.
The reheating temperature can be controlled according to the design of the reheater 83, e.g. by means of a bypass of the reheater or its parts at the side of the steam-gas mixture, by means of a bypass at the side of the flue gas or by a combination of both.

In the steam-gas power cycle in the sample design according to Fig. 11, for increasing its efficiency, an increase in the steam-gas mixture temperature before input to the steam generator 31 is applied by means of the additional combustion of further fuel, e.g. natural gas, in device 85' for additive combustion.
The additive combustion is applied in such cases, when higher parameters of steam are required for installation 30 of the Rankine-Clausius cycle. For additive combustion, the air contained in the steam-gas mixture can be utilized.

In the steam-gas power cycle in the sample design in Fig. 12, for cooling the flue gas to the required output temperature from the steam-gas generator 87, the flue-gas heater 73 of the cooling medium is applied, which can be designed for heating the medium to a temperature lower than the boiling temperature or also as an evaporating reheater.
The flue-gas heater 73 is used in such cases when, for fuel combustion, the combustion air will be sufficient at a temperature that is achieved in the combustion air preheater 38 (Fig. 3) or in case, if in the application of the combustion air heater 11, the necessary temperature of flue gas behind the steam-gas mixture heater 7 (Fig. 3, Fig. 4) will not be achievable; in this case the combination of the flue gas heater 73 of the cooling medium and the combustion air heater 11, included behind it, are also applicable.

In connecting the power cycle in the sample design in Fig. 13, waste heat of the steam-gas mixture, e.g. behind the combustion air preheater 38, is utilized for preheating the injected medium in the exchanger 90 for heating the injected medium and the medium preheated in this way is injected by means of the pipes 26, 26b, 26c, or 26d into the steam-gas mixture.
By preheating the injected medium, the steam ratio in the steam-air mixture before the gas turbine 28 is increased; by including the intermediate mixing cooler 92, it is possible to approximate the isothermal compression and especially in the exchanger 90 for preheating the injected medium, further condensate from the steam-air mixture is obtained, which is then drained by means of the condensate pipe 49c.

In the power cycle in the sample design in Fig. 14, for the generation of the steam-gas mixture in the mixing unit 21, the superheated steam is used, which is obtained from the saturated steam from the output 5 of the cooling medium steam from the cooled combustion chamber 1 by means of the heating of the steam by flue gas from the cooled combustion chamber 1 in the steam superheater 106. The pressure at the steam output 5 from the cooled combustion chamber 1 corresponds to the pressure of the gas behind the compressor 22.

In the power cycle in the sample design in Fig. 15, for the generation of the steam-gas mixture in the mixing unit 21, the steam is used after the expansion in the high-pressure steam turbine 104 of the same pressure as the gas pressure behind compressor 22.
The superheating of the steam, drawn from the output 5 of the cooled combustion chamber 1 to the required higher temperature, is carried out by the flue gas from the cooled combustion chamber 1 in the steam superheater 106, the output 105 of which is connected to the high-pressure steam turbine 104. The pressure at the output 5 of the cooling medium steam from the cooled combustion chamber 1 is higher than the pressure of the steam behind compressor 22.

In the power cycle in the sample design in Fig. 16, for the generation of the steam-gas mixture in the mixing unit 21, only a part of the steam, which is drawn from the output 5 of the cooled combustion chamber 1, is utilized, and the remaining part of this steam is drawn by means of the supply steam pipe 108 to the steam superheater 106, in which it is superheated to the required temperature by the flue gas from the cooled combustion chamber 1 and is conducted by means of the output steam pipe 109 to the steam turbine 32 of the installation 30 of the Rankine-Clausius steam cycle.
The amount of the drawn steam is controlled by flow control devices 110; the pressure at the output 5 of the cooled combustion chamber 1 corresponds to the pressure of the gas behind the compressor 22.

In the power cycle in the sample design according to Fig. 17, for generating the steam-gas mixture in the mixing unit 21, only part of the steam, which is drawn from output 5 of the cooled combustion chamber 1, is utilized and the remaining part of this steam is drawn by means of the supply pipe 108 to the steam superheater 106, in which it is superheated to the required temperature by the flue gas from the cooled combustion chamber 1 and conducted by means of output pipe 109 to the condensing turbine 111 and the condensate is conducted by means of the condensate pipe 112 from the condenser 33 to the cooling medium tank 20. The pressure at the output 5 of the steam of the cooled combustion chamber 1 corresponds to the pressure of the gas behind the compressor 22.

In the power cycle in the sample design in Fig. 18, for generation of the steam-gas mixture in the mixing unit 21, only part of the superheated steam, conducted by means of the main pipe 113 from the output of the back-pressure turbine 104, is utilized and the remaining part of this steam is conducted by means of the branching pipe 114 to the steam turbine 32 of installation 30 of the Rankine-Clausius steam cycle.
The amount of the extracted steam for steam turbine 32 is controlled by the flow control devices 110 and the pressure at output 5 for the steam of the cooled combustion chamber 1 is higher than the gas pressure behind the compressor 22.

In the power cycle in the sample design in Fig. 19, for generation of the steam-gas mixture in the mixing unit 21, only part of the superheated steam from the steam superheater 106 is utilized, which is extracted - after a partial expansion in the condensing turbine 115 to a pressure corresponding to the pressure of the gas behind the compressor 22 - by means of extraction pipe 116 from the controlled extraction 118 and the remaining part of the steam condenses in condenser 33 and the developed condensate is conducted by means of condensate pipe 112 to the cooling medium tank 20. The pressure at output 5 for the steam from the cooled combustion chamber 1 is higher than the gas pressure behind the compressor 22.

In the power cycle in the sample design in Fig. 20, for generation of the steam-gas mixture in the mixing unit 21, only part of the superheated steam from the steam superheater 106 is utilized, which is extracted from the discharge of the back-pressure turbine 119 by means of the extraction pipe 116 with a pressure corresponding to the gas pressure behind compressor 22 and the remaining part of the steam is conducted through the controlled extraction 118' by means of the branch pipe 114 to the steam turbine 32 of installation 30 of the Rankine-Clausius steam cycle. The pressure at the output 5 from the cooled combustion chamber 1 is higher than the gas pressure behind the compressor 22.

In the power cycle in the sample design in Fig. 21, the saturated steam from output 5 of the cooled combustion chamber 1 is superheated by the flue gas from the cooled combustion chamber 1 in the first parts of the steam superheater 106 and it superheats to the final temperature by radiation of flue gas and the flame in the output part 106' of the steam superheater in the cooled combustion chamber 1.
In the alternative design, the saturated steam from output 5 of the cooled combustion chamber 1 is partly heated in the input part of the steam superheater 106 by means of the flue gas behind the cooled combustion chamber 1; it is then heated to a higher temperature by flame radiation and flue gas in the medium part 106' of the superheater in the cooled combustion chamber 1 and then it is heated to the output temperature in the output part of the steam superheater 106 in the flue gas behind the cooled combustion chamber 1.

In the power cycle in the sample design in Fig. 22, the saturated steam from output 5 of the cooled combustion chamber 1 is preheated to the required temperature by means of flue gas and flame radiation in the steam superheater 106 in the cooled combustion chamber 1.

In the power cycle in the sample design in Fig. 23, the steam-gas mixture generated in mixing unit 21 is first heated by means of flue gas and flame radiation in the input part 7' of the steam-gas mixture heater 7 in the cooled combustion chamber 1 and is heated to the required temperature in outlet 9 of the steam-gas mixture by flue gas in the steam-gas mixture heater 7 behind the combustion chamber 1, e.g. in parts 7" and 7"', whereas the steam-gas mixture can be cooled before the inlet to the individual parts 7', 7", and 7'" of the steam-gas mixture heater 7 in the injection cooler 25, 25b and 25e.

In the power cycle in the sample design in Fig. 24, the steam-gas mixture generated in the mixing unit 21 is heated first by means of flue gas behind the cooled combustion chamber 1, e.g. in parts 7' and 7" of the steam-gas mixture heater 7, and it is heated to the required temperature in the steam-gas mixture outlet 9 by means of flue gas and flame radiation in the output part 7'" in the cooled combustion chamber 1, whereas before input to the single parts 7', 7", and 7'" of the steam-gas mixture heater 7, the steam-gas mixture can be cooled in the injection cooler 25, 25b and 25d.

In the power cycle in the sample design in Fig. 25, the steam-gas mixture generated in the mixing unit 21 is heated first by means of flue gas behind the cooled combustion chamber 1 in the input part 7' of the steam-gas mixture heater 7, further heating is carried out by means of flue gas and flame radiation in the medium part 7" of the steam-gas mixture heater 7; the steam-gas mixture is heated to the required temperature in the steam-gas mixture outlet 9 by flue gas behind the cooled combustion chamber 1 in output part 7'" of the steam-gas mixture heater 7, whereas before the input into the individual parts 7', 7", and 7'", the steam-gas mixture can be cooled in the injection cooler 25, 25b and 25d.

## Claims

1. The gas turbine power cycle with indirect heating and a wet steam cycle, or a combined steam-gas cycle with the same gas turbine and steam turbine, if needed with the same gas turbine with a regeneration heat exchanger, or with the same gas turbine with reheating before and behind the gas turbine, or with the same gas turbine with isothermal compression, utilizing the primary energy of fossil fuels, alternative fuels, and wastes through their combustion, or utilizing the perceptible heat of various waste gases or mixtures of gases, is **characterized by** the working medium of the gas turbine (28), which is the steam-gas mixture of the gas supplied by compressor (22) and the steam of the cooling medium from the cooled combustion chamber (1), or from cooled heat aggregate (51) or, as the case may be, the steam-gas mixture of the gas supplied by compressor (22) and of the steam of the cooling medium from the cooled combustion chamber (1), or from the cooled heat aggregate (51) and the steam of the medium injected into the gas supplied by compressor (22) and/or into the steam-gas mixture or the steam-gas mixture of the gas supplied by compressor (22) and the steam of the medium injected into the gas supplied by compressor (22) and/or into the steam-gas mixture, whereas for heating the steam-gas mixture to the working medium temperature of the gas turbine (28) or for heating the steam-gas mixture before the gas turbine (28) to an achievable temperature, the heat of the exiting flue gas from the cooled combustion chamber (1) is utilized, or from cooled heat aggregate (51) or the perceptible heat from aggregate (61) or the heat of the flue gases and the flame in the cooled combustion chamber (1).

2. The power cycle according to claim 1 is **characterized by** the fact that the medium supplied by compressor (22) is injected into the gas before the compressor in case of preheating the inlet gas in the process gas heater (79), further behind the compressor in case of including the regeneration exchanger (56) and in the suction of compressor (22) and/or between the stages of the compressor.

3. The power cycle according to claim 1 is **characterized by** the fact that the medium is injected into the steam-gas mixture before the steam-gas mixture heater (7) and/or at least between some parts of the steam-gas mixture heater (7) or behind the steam-gas mixture heater (7) or in a combination of the options mentioned above.

4. The power cycle according to claims 1 to 3 is **characterized by** the fact that the residual heat of the exiting flue gas or waste gases behind the heater (7) of the steam-gas mixture is utilized for heating the combustion air in the combustion air heater (11) and/or for heating the cooling medium for the cooled combustion chamber (1) or cooled heat aggregate (51) in the flue gas heater (73) of the cooling medium or for heating the injected medium in the heater (64) of the injected medium or in a combination of some of the options mentioned above.

5. The power cycle according to the claim 1 to 4 is **characterized by** the residual heat of the steam-gas mixture leaving the steam turbine (28) or the installation (30) of the steam Rankine-Clausius cycle, or leaving the regeneration exchanger (56) and utilized for preheating the combustion air.

6. The power cycle according to claims 1 to 5 is **characterized by** the fact that the residual heat of the steam-gas mixture behind the installation (30) of the Rankine-Clausius steam-gas cycle, or behind the preheater (38) of the combustion air, is utilized for heating service water in the service hot water heater (43) or for preheating the additional cooling medium in the heat exchanger (77) or for preheating the air drawn by compressor (22) in the heater (79) or for heating the injected medium in the exchanger (90) or in a combination of some of the options mentioned above.

7. The power cycle according to claims 1 to 5 is **characterized by** the fact that the residual heat behind the regeneration exchanger (56) is utilized for preheating the injection medium in the preheater (58) of the injected medium and/or for preheating service hot water in the service hot water heater (43).

8. The power cycle according to claims 1 to 6 is **characterized by** the fact that the temperature of the steam-gas mixture behind the gas turbine (28) is increased by the flue gas from the cooled combustion chamber (1), or from the cooled heat aggregate (51), or by heating by gases from aggregate (61), in the preheater (83) of the steam-gas mixture.

9. The power cycle according to claims 1 to 8 is **characterized by** the fact that the steam content in the steam-gas mixture in the discharge pipe (48) at the end of the gas cycle of the gas turbine (28) is reduced by including the separation condenser (45) with the cooling medium at the ambient temperature or a lower temperature.

10. The power cycle according to claims 1 to 9 is **characterized by** the fact that the separated condensate of the steam-gas mixture from the steam generator (31), or from the combustion air preheater (38), or from the service water heater (43), or from the separation condenser (45), or from the preheater (58) of the injected medium, or from the heater (79) of the drawn gas is utilized as the cooling medium and/or injected medium in the steam-gas power cycle.

11. The power cycle according to claims 1 to 10 is **characterized by** the fact that for the generation of the steam-gas mixture in the mixing unit (21), the cooling medium steam from the outlet (5) of the cooled combustion chamber (1) is used at a pressure corresponding to the pressure of the gas behind the compressor (22) after its superheating to a higher temperature in the steam superheater (106).

12. The power cycle according to claims 1 to 10 is **characterized by** the fact that for the generation of the steam-gas mixture in the mixing unit (21), only part of the steam from the outlet (5) of the cooled combustion chamber (1) is used at the pressure corresponding to the pressure of the gas behind the compressor (22) and the remaining part of this steam is utilized after its superheating to a higher temperature in the steam superheater (116) in the steam turbine (32) of the installation (30) of the Rankine-Clausius cycle, or it is utilized in the condensing steam turbine (111).

13. The power cycle according to claims 1 to 10 is **characterized by** the fact that for the generation of the steam-gas mixture in the mixing unit (21), the steam of the cooling medium is utilized from the output (5) of the cooled combustion chamber (1) at a higher pressure than the gas pressure behind the compressor (22) after its superheating to a higher temperature in the steam superheater (106) and after the expansion in the back-pressure steam turbine (104) to a pressure corresponding to the pressure of the gas behind the compressor (22) for the generation of the steam-gas mixture in the mixing unit (21), or only part of this steam is utilized and its remainder is used in the steam turbine (32) of installation (30) of the Rankine-Clausius cycle, or only part of the steam of the superheater (106) after its expansion in a condensing turbine (115) to the pressure in the controlled extraction (118) corresponding to the pressure of the gas behind the compressor (22) and the remaining part of this steam condenses in the condenser (33) of this turbine, or only a part of the steam from the steam superheater (116) is utilized after its expansion in the back-pressure turbine (119) to a pressure corresponding to the pressure of the gas behind the compressor (22) and the remaining part of this steam is utilized after expansion to the pressure in the controlled intake (118') in the steam turbine (32) of installation (30) of the Rankine-Clausius steam cycle.

14. The superheater (106) of the steam from the cooling medium according to claims 11 to 14 is **characterized by** its design from one or several parts, whereas one part is placed in the cooled combustion chamber (1).

15. The heater of the steam-gas mixture (7) according to claims 1, 3 and 4 is **characterized by** the fact that it is designed from several parts, of which the input part (7') or some of the inner parts (7") or the output part (7'") is placed in the cooled combustion chamber (1), whereas other parts are placed in the flue gas behind the cooled combustion chamber (1).
